# EUROPÄISCHE PATENTSCHRIFT

(11) **EP 3 175 253 B1**
(45) Veröffentlichungstag und Bekanntmachung des Hinweises auf die Patenterteilung: **08.01.2020**
(21) Anmeldenummer: 15750273.3
(22) Anmeldetag: 29.07.2015
(51) Int. Cl.: G01S 5/16, G01S 17/66, G01S 7/00, G01S 1/70, G01S 17/42, G01C 15/00

(54) **TRACKINGVERFAHREN UND TRACKINGSYSTEM**
TRACKING METHOD AND TRACKING SYSTEM
PROCÉDÉ DE SUIVI ET SYSTÈME DE SUIVI

(30) Priorität: 01.08.2014 EP 14179437
(43) Veröffentlichungstag der Anmeldung: 07.06.2017
(73) Patentinhaber: Hilti Aktiengesellschaft, 9494 Schaan (LI)
(72) Erfinder: BRALLA, Dario, CH-9470 Buchs (CH); KHANDOZHKO, Serhey, CH-9470 Buchs (CH); SCHMIDT, Peer, 88131 Lindau (DE)
(74) Vertreter: Hilti Aktiengesellschaft Corporate Intellectual Property
(86) Internationale Anmeldenummer: PCT/EP2015/067344
(87) Internationale Veröffentlichungsnummer: WO 2016/016290

(56) Entgegenhaltungen:
- CN-A- 101 424 551
- DE-A1-102008 054 450
- US-A1- 2005 213 082

## Beschreibung

### GEBIET DER ERFINDUNG

Die vorliegende Erfindung betrifft ein Trackingverfahren, welches für eine Positionsbestimmung in einem Innenraum eingerichtet ist.

### OFFENBARUNG DER ERFINDUNG

Das erfindungsgemäße Trackingverfahren bestimmt die Position einer mobilen Messstation relativ zu einer Basisstation in einem Innenraum. Das Trackingsystem hat eine Basisstation und eine mobile Messstation. Die Position der Messstation wird relativ zu der Basisstation bestimmt. Die Basisstation schwenkt oder dreht ein Bündel mit wenigstens einem Lichtstrahl um wenigstens eine Achse der Basisstation in sich gemäß einem vorgegebenen Ablauf ändernde Emissionsrichtungen zum Erzeugen eines wandernden Musters aus Lichtpunkten auf einer Wand des Innenraums. Eine Kamera der mobilen Messstation zeichnet eine Serie von Bildern der Wand des Innenraums unter gleichbleibender Blickrichtung auf, wobei in der Serie auf wenigstens drei unterschiedlichen Bildpunkten einer der wandernden Lichtpunkte abgebildet ist. Die Bildkoordinaten der wenigstens drei unterschiedlichen Bildpunkte werden bestimmt. Die wenigstens drei Emissionsrichtungen der Lichtstrahlen, deren Lichtpunkte zu einem Zeitpunkt in einem der Bilder auf einen der wenigstens drei unterschiedlichen Bildpunkte abgebildet sind, werden basierend auf den Zeitpunkten, an welchen das jeweilige Bild aufgezeichnet ist, ermittelt. Die wenigstens drei Abstände der Achse der Basisstation zu der Wand in den wenigstens drei Emissionsrichtungen werden basierend auf in einer Referenz-Datenbank hinterlegten Abstandsmessungen zu der Wand in von der Basisstation ausgehenden Messrichtungen ermittelt. Die Position der mobilen Messstation wird basierend auf den Bildkoordinaten der wenigstens drei Bildpunkte, der den Bildpunkten zugehörigen Emissionsrichtungen und den jeweiligen Abständen der Basisstation zu der Wand in den zugehörigen Emissionsrichtungen ermittelt.

Das Bündel kann aus genau einem Lichtstrahl oder mehreren zueinander in konstanten Winkelabständen angeordneten Lichtstrahlen bestehen. Die Serie kann ein oder mehrere Bilder umfassen, welche sich durch die gleiche Blickrichtung auszeichnen. Bei einer Serie verschiedener Bilder kann jeweils der Lichtpunkt eines Lichtstrahls auf unterschiedliche Bildpunkte oder Lichtpunkte verschiedener Lichtstrahlen auf die unterschiedlichen Bildpunkte abgebildet werden.

Die Abstandsmessungen in den Messrichtungen erfolgen vorzugsweise mit einem Mess-Lichtstrahl einer optischen Abstandsmesseinheit. Das Trackingverfahren kann eine zu einer Trackingphase separate Initialisierungsphase aufweisen. Währen der Initialisierungsphase wird der wenigstens eine Mess-Lichtstrahl um die wenigstens eine Achse in gemäß einem vorgegeben Ablauf sich ändernden Messrichtungen gedreht oder geschwenkt. Der jeweilige Abstand der Achse zu der Wand in den Messrichtungen wird basierend auf einer Laufzeit und/oder Interferenzmessung des Mess-Lichtstrahls gemessen. Die Messrichtungen und zugehörig gemessenen Abstände können in einer Referenz-Datenbank gespeichert werden. Während der Trackingphase wird der Abstand in einer Emissionsrichtung des Lichtstrahls anhand einer mit der Emissionsrichtung übereinstimmenden Messrichtung in der Referenz-Datenbank oder einem gemäß den jeweiligen Differenzen der abgespeicherten Messrichtungen zu der Emissionsrichtung gewichteten Mittelwert der abgespeicherten Abstände ermittelt.

Eine Ausgestaltung sieht vor, dass während der Initialisierungsphase der Mess-Lichtstrahl mit einer ersten Winkelgeschwindigkeit gedreht oder geschwenkt wird und während der Trackingphase das Bündel der Lichtstrahlen mit einer zweiten Winkelgeschwindigkeit gedreht oder geschwenkt wird, wobei die zweite Winkelgeschwindigkeit größer als die erste Winkelgeschwindigkeit ist.

Eine Ausgestaltung sieht vor, dass der Ablauf gemäß dem das Bündel mit dem wenigstens einen Lichtstrahl gedreht oder geschwenkt wird identisch zu dem Ablauf gemäß dem der Mess-Lichtstrahl gedreht oder geschwenkt wird.

Eine Ausgestaltung sieht vor, dass das Bündel um genau eine Achse gedreht oder geschwenkt wird und das Bündel wenigstens zwei Lichtstrahlen, aufweist, die in einer die Achse enthaltenden Ebene um einen Winkel zueinander geneigt sind. Die Basisstation bewegt das Bündel um eine z.B. vertikale Achse und erreicht durch die Bewegung und Zeitpunkte eine horizontale Auflösung. Die vertikale Auflösung wird durch die in unterschiedlichen Höhenwinkel der Lichtstrahlen erhalten. Die vertikale Auflösung ist durch die Zahl der Lichtstrahlen begrenzt und deutlich geringer als die durch die Zeitmessungen begrenzte Auflösung in der horizontalen Ebene. Allerdings zeigen die Strukturen typischer Innenräume vergleichsweise weniger Änderungen längs der vertikalen Richtung gegenüber den horizontalen Richtungen.

Eine Ausgestaltung sieht vor, dass ein erstes der Bilder an einem ersten Zeitpunkt und ein zweites der Bilder an zum ersten Zeitpunkt verschiedenen zweiten Zeitpunkt aufgenommen werden. Der erste Zeitpunkt kann adaptiv angepasst werden, um einen der Lichtpunkte des wandernden Musters auf einen Bildpunkt an einem Rand des Bildes abzubilden, und der zweite Zeitpunkt wird adaptiv angepasst, um einen der Lichtpunkte des wandernden Musters auf einen Bildpunkt an anderen Rand des Bildes abzubilden.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 ein Trackingsystem;
Fig. 2 einen Markierer des Trackingsystems;
Fig. 3 eine mobile Messstation;
Fig. 4 ein von der Messstation aufgezeichnetes Bild;
Fig. 5, Fig. 6 eine Basisstation;
Fig. 7 ein Innenraum mit Trackingsystem zugehörig zu dem Bild in Fig. 4
Fig. 8 zwei überlagerte Bilder einer Serie
Fig. 9 ein Innenraum mit Trackingsystem
Fig. 10 drei überlagerte Bilder einer Serie zu dem Innenraum von Fig. 9
Fig. 11, Fig. 12 eine Basisstation;

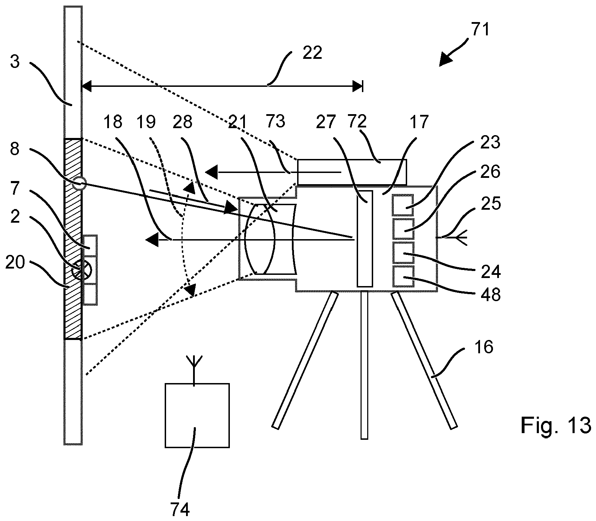

Fig. 13 eine mobile Messstation

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

Ein Trackingsystem **1** kann verwendet werden, die Position einer Stelle **2** auf einer Wand **3** auszumessen. Eine Anwendung sieht vor, dem Anwender die Raumkoordinaten der Stelle **2** über eine Anzeige **4** mitzuteilen. Die Position kann beispielsweise bezogen auf den Standort einer Basisstation **5** des Trackingsystems **1** oder in Bezug auf eine zuvor markierte Stelle **2** auf der Wand **3** angegeben werden. Eine weitere Anwendung sieht vor, eine der markierten Stelle **2** auf der Wand **3** zugehörige Position in einem Bauplan zu vermerken. Bei einer Weiterführung wird der Bauplan um die markierte Stelle **2** unmittelbar auf die Wand **3** projiziert. Die Wand **3** steht stellvertretend für alle Innenflächen eines Gebäudes, insbesondere der Deckenfläche und des Bodens, und auch den Innenraum abschließender beweglicher Elemente, wie Türen, Fenster etc.

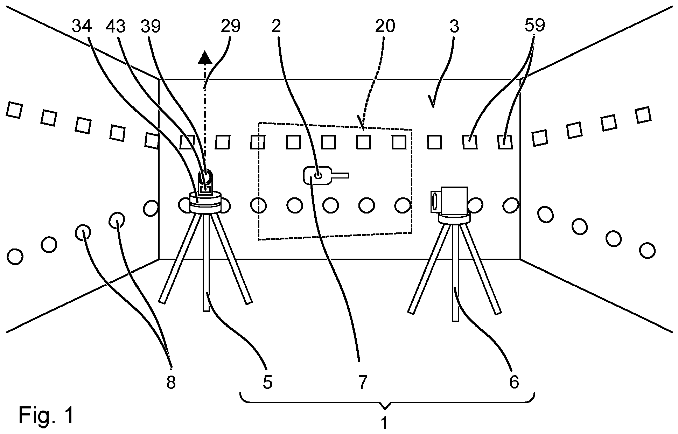

Das beispielhafte Trackingsystem **1** von Fig. 1 beinhaltet eine stationäre Basisstation **5**, eine mobile Messstation **6** und einen Markierer **7**. Der Anwender kann mit dem Markierer **7** eine beliebige Stelle **2** auf einer Wand **3** markieren. Die mobile Messstation **6** zeichnet zu einem Zeitpunkt die relative Position der markierten Stelle **2** in Bezug zu einem sich bewegenden Lichtpunkt **8** auf, den die stationäre Basisstation **5** auf die Wand **3** projiziert. Die stationäre Basisstation **5** ermittelt die zu dem Zeitpunkt von dem Lichtpunkt **8** auf der Wand **3** eingenommene absolute Position, woraus die absolute Position der markierten Stelle **2** in dem Koordinatensystem der Basisstation **5** ermittelbar ist.

Das beispielhafte Trackingsystem **1** kann die Position der mobilen Messstation **6** in dem Innenraum relativ zu der Basisstation **5** ermitteln. Die mobile Messstation **6** zeichnet dazu in einer kurzen Zeitspanne den bewegten Lichtpunkt **8** an drei oder mehr verschiedenen Stellen auf der Wand **3** in einem Bild **9** auf. Der Zeitpunkt oder die Zeitpunkte an denen die Lichtpunkte **8** erfasst werden, wird genutzt um von der Basisstation **5** die Koordinaten der jeweiligen Stellen des Lichtpunkts **8** auf der Wand **3** abzufragen. Eine Triangulation der Stellen basierend auf dem Bild **9** ergibt die Position der mobilen Messstation **6.**

Der Markierer **7** kann beispielsweise eine Platte **10** mit einem Handgriff **11** sein, welchen der Anwender physisch an die Wand **3** hält. Die Platte **10** hat ein kleines Sichtloch **12**, welches der Anwender auf der Stelle **2** an der Wand 3 positioniert. Auf der Platte **10** sind optische Positionsmarken **13**. Die Positionsmarke **13** kann beispielsweise durch mehrere in einem Muster angeordnete Leuchtdioden ausgebildet sein. Ferner kann der Markierer **7** eine Anzeige **4** und mehrere Bedienelemente **14**, z.B. Taster, aufweisen. Der Anwender kann über das Bedienelement **14** eine Positionsbestimmung des Markierers **7** anfordern. Die aktuelle Position wird in der Anzeige **4** dargestellt. Ferner kann die aktuelle Position als Ursprung eines Basis-Koordinatensystems **15** festgelegt werden, hiermit können in einfacher Weise Entfernungsmessungen zweier Stellen **2** auf der Wand **3** durchgeführt werden.

Ein alternativer Markierer basiert auf einem handgehaltenen Lichtzeiger, z.B. einem Laserpointer. Der Anwender zeigt mit dem Lichtzeiger auf die zu bestimmende Stelle. Die Positionsmarke bei dem Markierer ist somit der von dem Lichtzeiger erzeugte Lichtmarker auf der Wand. Der Markierer kann ebenso mit einer Anzeige und Bedienelementen versehen sein.

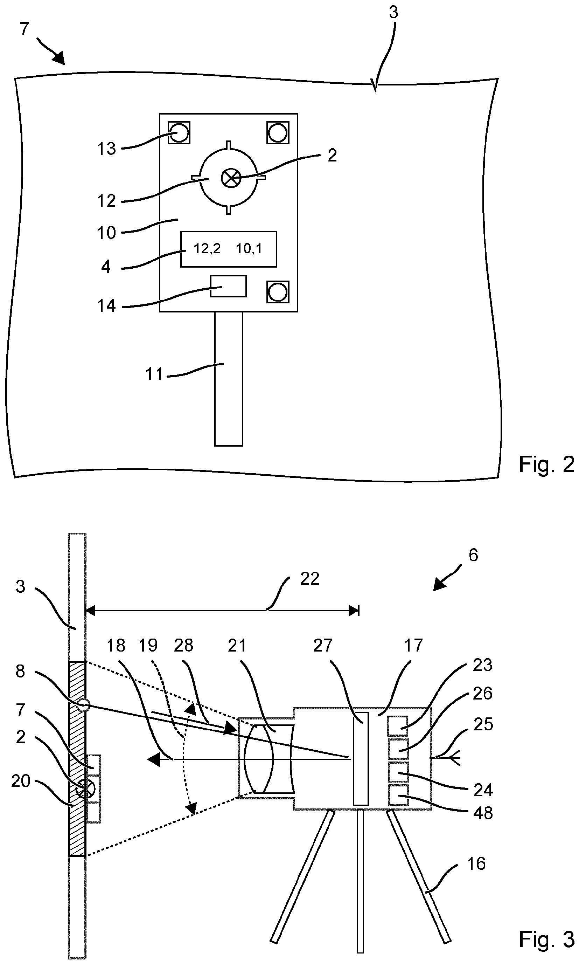

Die mobile Messstation **6** kann auf einem Stativ **16** in dem Raum aufgestellt sein (Fig. 3). Der Standort ist vorzugsweise verschieden von dem Standort der Basisstation **5** (Fig. 1). Die mobile Messstation **6** hat eine Kamera **17**, die in einer Blickrichtung **18** Bilder **9** von der Wand **3** aufzeichnet. Die Blickrichtung **18** ist koaxial zu der optischen Achse der Kamera **17**. Das Sichtfeld **19** der Kamera **17** legt den für das Trackingsystem **1** sichtbaren Wandabschnitt **20** fest, in welchem die Positionsmarke **13** des Markierers **7** von dem Trackingsystem **1** erfasst wird. Der Wandabschnitt **20** muss von dem Lichtpunkt **8** durchlaufen werden. Der Lichtpunkt **8** kann periodisch in das Sichtfeld **19** der Kamera **17** ein-und austreten. Die Größe des Sichtfeldes **19** und damit den sichtbaren Wandabschnitts **20** beeinflusst der Anwender in bekannter Weise durch das Objektiv **21** der Kamera **17** und die Entfernung **22** der Kamera **17** zu der Wand **3**. Bei einem Stativ **16** kann in der Regel eine weitgehend horizontal ausgerichtete Kamera **17** angenommen werden. Alternativ zu einem festen Standort kann die Kamera **17** von dem Anwender mitgeführt werden, z.B. auf einem Helm befestigt. Hierbei sind aufgrund der vollständig unbekannten Ausrichtung der mobilen Messstation **6** und deren Kamera **17** mehr gemessene Informationen notwendig, um Positionen auf der Wand **3** und in dem Innenraum zu bestimmen. Die nachfolgend beschriebenen Trackingverfahren benötigen teils mehrere Bilder **9** des Wandabschnitts **20**. Die Blickrichtung **18**, d.h. der Wandabschnitt **20,** muss für die aufeinanderfolgenden Bilder **9** gleich sein. Da die Bilder **9** in Bruchteilen einer Sekunde hintereinander aufgenommen werden können, sind typische Bewegungen einer handgehaltenen Messstation **6** oder eine Anordnung auf dem Helm unproblematisch.

Sofern der Anwender die mobile Messstation **6** richtig aufgestellt hat, ist der Lichtpunkt **8** zumindest zeitweise in dem Sichtfeld **19** der Kamera **17**. Typischerweise, wie aus der

Beschreibung der Basisstation **5** noch ersichtlich wird, ist der Lichtpunkt **8** zumeist außerhalb des Sichtfelds **19**, tritt in dieses aber periodisch und an gleicher Stelle ein. Die Kamera **17** zeichnet fortlaufend Bilder **9** von dem Wandabschnitt **20** auf. Die Kamera **17** hat einen Auslöser **23**, der den Zeitpunkt für das Aufzeichnen eines Bildes **9** festlegt. Der Auslöser **23** kann durch eine internen festen Taktgeber **24** der Messstation **6** beispielsweise alle 10 ms ein Bild **9** aufzeichnen. Der Zeitpunkt an dem der Auslöser **23** betätigt wurdew. ein Bild **9** aufgezeichnet wird, wird entweder festgehalten oder lässt sich in geeigneter Weise nachträglich ermitteln. Der Auslöser **23** kann auch mit einer Steuerung versehen sein, die einen Zeitpunkt für das nächste Erscheinen des Lichtpunkts **8** in dem Sichtfeld **19** schätzt und zu diesem Zeitpunkt auslöst. Eine weitere Ausführung sieht vor, dass der Auslöser **23** über eine Funkschnittstelle **25** von der Basisstation **5** fernausgelöst wird.

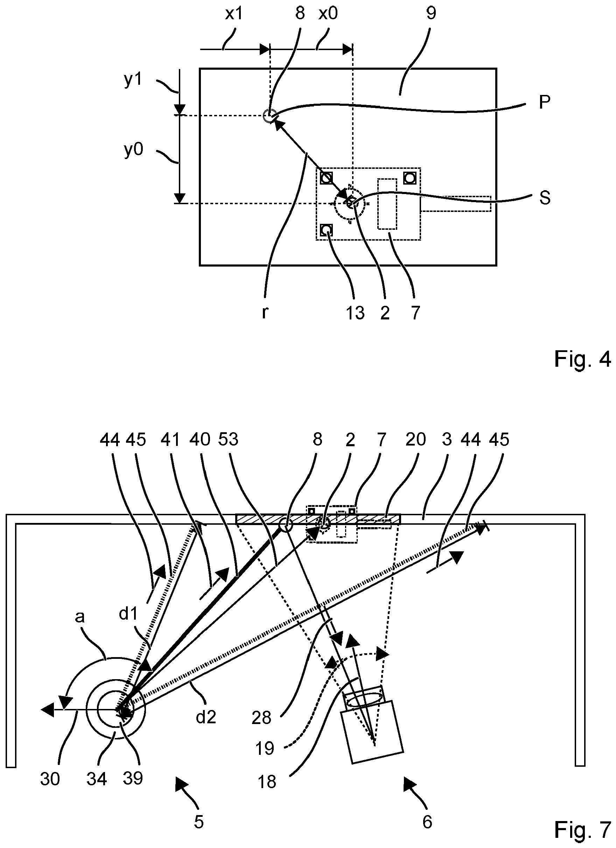

Der Lichtpunkt **8** ist in manchen der Bilder **9** auf einem Bildpunkt **P** abgebildet (Fig. 4). Eine Bildauswertungseinheit **26** ermittelt, ob in einem Bild **9** der Lichtpunkt **8** abgebildet ist. Der Lichtpunkt **8** zeichnet sich durch seinen hohen Helligkeitswert gegenüber der Umgebung, seine spezifische Farbe und geringe Größe verglichen zu typischen Strukturen in dem Wandabschnitt **20** aus. Eine Bildauswertungseinheit **26** nützt beispielsweise einen Farbfilter zum Ausblenden anderer als der spezifischen Farbe; ein Kontrastfilter blendet weitgehend gleich beleuchte Flächen aus. Die Bildpunkte des gefilterten Bildes **9** werden mit einem Schwellwert verglichen. Ein den Schwellwert überschreitender Bildpunkt **P** wird mit dem Lichtpunkt **8** assoziiert. Die Bilder **9** ohne Lichtpunkt **8** und zugehörige Daten können verworfen werden.

Die Bildauswertungseinheit **26** kann in den Bildern **9** mit Lichtpunkt **8** die Bildkoordinaten **x1**, **y1** des Bildpunkts **P** ermitteln. Die Bildkoordinaten werden beispielsweise durch Zeile und Spalte des Bildpunkts **P** in dem typischerweise gerastertem Bild **9** angegeben. Das Raster entspricht beispielsweise der Gitteranordnung der lichtempfindlichen Zellen eines CCD-Chips **27**. Eine höhere Auflösung der Bildkoordinaten **x1**, **y1** kann durch eine Auswertung der Intensitätsverteilung benachbarter Bildpunkte erreicht werden.

Der Bildpunkt **P** und die Bildkoordinaten **x1**, **y1** geben eine (Aufnahme-) Richtung **28** an, unter welcher die Kamera **17** den Lichtpunkt **8** zu dem Zeitpunkt sieht. Die Bestimmung der Bildkoordinaten **x1**, **y1** referenziert den Lichtpunkt **8** in einem Kamera-basierten Koordinatensystemw. Koordinatensystem der mobilen Messstation **6.**

Die Bildauswertungseinheit **26** erkennt in dem Bild **9** die Positionsmarken **13** des Markierers **7.** Die vorzugsweise leuchtende Positionsmarke **13** kann aufgrund ihrer Farbe, Form, etc. in dem Bild **9** durch entsprechende Filter hervorgehoben werden. Die Bildkoordinaten der Positionsmarken **13** werden ermittelt. Basierend auf der bekannten Anordnung der Positionsmarken **13** können die Bildkoordinaten **x0**, **y0** des Sichtlochs **12** und damit der mit dem Sichtloch **12** markierten Stelle **2** errechnet werden. Alternativ können die Bildkoordinaten **x0**, **y0** der markierten Stelle **2** unmittelbar bestimmt werden, beispielsweise bei einer durch den Lichtzeiger hervorgehobenen markierten Stelle **2**.

Die Bildauswertungseinheit **26** kann in der mobilen Messstation **6** implementiert sein. Die Implementierung kann durch eine von einem Mikroprozessor ausgeführte Routine implementiert sein.

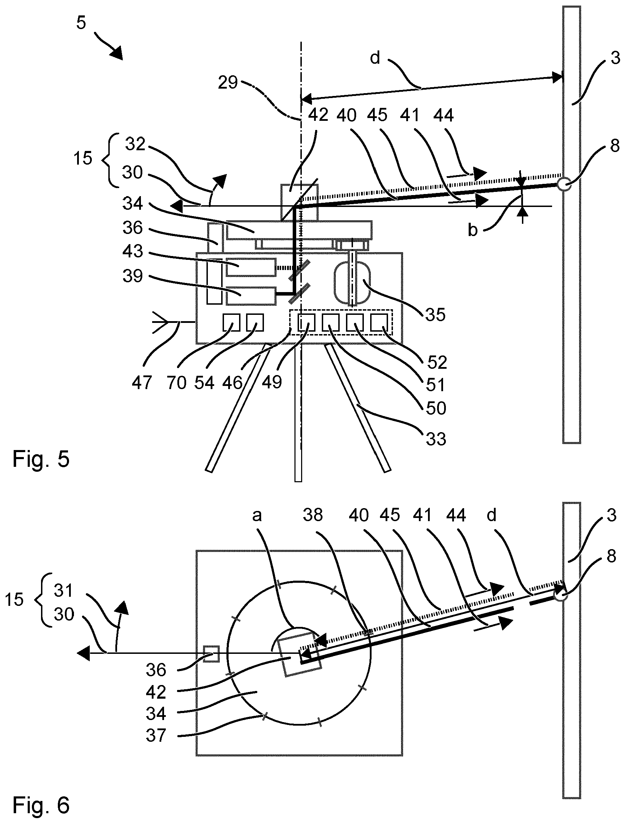

Die Basisstation **5** wird an einem festen Standort aufgestellt. Eine beispielhafte Basisstation **5** ist in Fig. 5 in einer Seitenansicht und in Fig. 6 in einer Draufsicht dargestellt. Die Basisstation **5** definiert ein Koordinatensystem für das Trackingsystem **1**, welches nachfolgend als Basis-Koordinatensystem **15** bezeichnet wird. Das Basis-Koordinatensystem **15** kann mit einem primären Koordinatensystem, z.B. einem Bauplan, abgeglichen werden. Beispielsweise wird der Standort von dem Anwender ausgemessen und manuell eingegeben. Alternativ kann der Anwender den Markierer **7** an eine Referenzstelle auf der Wand **3** halten, diese Referenzstelle von dem Trackingsystem **1** ausmessen lassen und als Ursprung des Basis-Koordinatensystems **15** festlegen. Weitere Methoden des Abgleichs sind möglich. Nachfolgend wird für eine einfachere Beschreibung der Ursprung des Basis-Koordinatensystems **15** auf den Standort der Basisstation **5** gesetzt, eine Achse **29** des Basis-Koordinatensystems **15** ist vertikal, d.h. parallel zu der Schwerkraft, und eine Nullrichtung **30** des Basis-Koordinatensystems **15** zeigt in der Horizontalebene in eine bekannte Himmelsrichtung, z.B. nach Norden. Die Basis-Koordinaten werden nachfolgend als Kugelkoordinaten mit einer horizontalen Winkelrichtung **31**, einer vertikalen Winkelrichtung **32** und einem Abstand zum Ursprung, d.h. dem Standort der Basisstation **5**, beschrieben.

Die Basisstation **5** hat ein Stativ **33**. Das Stativ **33** dient dem stabilen Aufstellen der Basisstation **5**. Das dargestellte dreibeinige Stativ **33** ist insbesondere für das einfache Aufstellen auf unebenen Böden geeigneten. Andere Bauformen mit nur einer Säule, mehr als drei Füssen etc. können ebenfalls geeignet sein.

Die Basisstation **5** hat auf dem Stativ **33** einen Schwenkkopf **34**, der um eine Achse **29** oder zwei Achsen gedreht oder geschwenkt werden kann. Die Orientierung des Schwenkkopfs **34** wird durch einen Winkel bei einer beweglichen Achse 29bzw. zwei Winkel bei zwei beweglichen Achsen beschrieben. Aus messtechnischen Gründen bietet es sich an, die Winkel jeweils in den auf den Achsen senkrecht stehenden Ebenen gegenüber der Nullrichtung **30** zu bestimmen. Der beispielhaft dargestellte Schwenkkopf **34** ist ein Drehteller, der nur um die vertikale Achse **29** drehbar ist. Die Orientierung hat einen festen Höhenwinkel **b** gleich Null und einen sich ändernden Horizontalwinkel **a**. Der beispielhafte Schwenkkopf **34** dreht sich in einem Drehsinn um die Achse **29**. In anderen Ausführungen oder auch einer Einstellung der Basisstation **5** kann der Schwenkkopf **34** um die Achse **29** zwischen zwei Grenzwinkeln, z.B. um 90 Grad, periodisch hin- und herschwenken.

Ein gesteuerter Antrieb **35** dreht bzw. schwenkt den Schwenkkopf **34**. Der Antrieb **35** enthält beispielsweise einen Elektromotor und ein Getriebe. Der Schwenkkopf **34** hat einen Encoder **36**, der die Orientierung des Schwenkkopfs **34** im dem Basis-Koordinatensystem **15** ermittelt. Bei einem ein-achsigen Schwenkkopf **34** erfasst der Encoder **36** einen Winkel, bei einem zwei-achsigen Schwenkkopf ermittelt der Encoder **36** zwei Winkel, um die Orientierung zu ermitteln. Der Encoder **36** kann in verschiedenen Bauweisen realisiert sein. Beispiele sind ein Winkelsensor, ein magnetischer Inkrementaldrehgeber, eine optisch abgetastete Lochscheibe, ein induktiv abgetasteter Ring mit sich periodisch wiederholenden Teilstrichen **37**, etc.. Ein weiteres Beispiel eines Encoders basiert auf einem drehzahlgeregelten Motor und einem Zeitnehmer, welcher aus der Drehzahl und der Zeit den Winkel berechnet. Der Encoder **36** ist mit der Nullrichtung **30** abgeglichen. Der Abgleich des Encoders **36** kann mit jedem Umlauf des Schwenkkopfs **34** wiederholt werden, z.B. ist eine spezielle Markierung **38** an dem Drehteller **34** für die Nullrichtung **30** angebracht.

Die Basisstation **5** hat eine Lichtstrahlquelle **39**. Die Lichtstrahlquelle **39** erzeugt einen kollimierten Lichtstrahl **40** geringer Divergenz. Die Lichtstrahlquelle **39** ist vorzugsweise eine Laserlichtquelle, z.B. mit einer Laserdiode. Der Lichtstrahl **40** zeichnet den Lichtpunkt **8** auf die Wand **3**. Der Lichtpunkt **8** ist ausreichend klein, z.B. mit einem Durchmesser von weniger als 3 mm, um eine ausreichende Ortsauflösung zu gewährleisten. Die Gestalt des Lichtpunkts **8** ist typischerweise kreis- oder ellipsenförmig. Mittels geeigneter Optiken, z.B. Beugungsgittern, kann dem Querschnitt des Lichtstrahls **40** und damit dem Lichtpunkt **8** eine andere Form aufgeprägt werden, z.B. rautenförmig, kreuzförmig oder ringförmig. Vorzugsweise ist der Lichtpunkt **8** unsichtbar im Infrarot.

Die Emissionsrichtung **41** des Lichtstrahls **40** wird durch den Schwenkkopf **34** festgelegt. Die Geometrie vereinfachend wird der Lichtstrahls **40** als von der Achse **29** ausgehend beschrieben. Die Emissionsrichtung **41** ist durch zwei Winkel festgelegt, welche ohne darauf beschränkt zu sein, nachfolgend durch einen Horizontalwinkel **a** und einen Höhenwinkel **b** angegeben wird. Der sich bewegende Schwenkkopf **34** bewegt auch den Lichtstrahl **40**, wodurch sich zumindest einer der Winkel **a**, **b** in einer vorgegebenen Weise verändert. Die Emissionsrichtung **41** ändert und wiederholt sich durch den Antrieb **35** in einer vorgegebenen Weise. Vorzugsweise wiederholt sich die Emissionsrichtung **41** mit einer festen Wiederholrate, welche z.B. durch eine konstante Winkelgeschwindigkeit des Drehtellers vorgegeben ist.

Bei einer Ausführungsform ist die Lichtstrahlquelle **39** auf dem Schwenkkopf **34** angeordnet (Fig. 1). Ferner kann der Lichtstrahl **40** in einem optischen Element **42** geführt sein, z.B. einem Lichtleiter. Die Austrittsöffnung des optischen Elements **42** wird von dem Schwenkkopf **34** bewegt. Eine andere Ausführungsform (Fig. 5, 6) hat angeordnet auf dem Schwenkkopf **34** einen Strahlteiler **42**, einen Spiegel oder ein ähnliches optisches Element **42** zum Umlenken des Lichtstrahls **40**. Die auf dem Stativ **33** ruhende Lichtstrahlquelle **39** koppelt den Lichtstrahl **40** in den Strahlteiler **42** ein. Der beispielhafte Strahlteiler **42** emittiert den Lichtstrahl **40** in eine zu der Achse **29** geneigte Emissionsrichtung **41**. Der Höhenwinkel **b** des Lichtstrahls **40** ist konstant. Beim Drehen des Schwenkkopfs **34** um die Achse **29** dreht sich der Lichtstrahl **40** ebenfalls um die Achse **29**, der Horizontalwinkel **a des** Lichtstrahls **40** ändert sich mit der gleichen Winkelgeschwindigkeit wie der Schwenkkopf **34**. Der rotierende Lichtstrahl **40** beschreibt einen Kegel. Der Lichtpunkt 8 läuft auf ebenen Wänden **3** entlang parabelförmigen Linien, welche sich aus dem Schnitt mit dem Kegel ergeben. Die Emissionsrichtung **41** des Lichtstrahls **40** und die Orientierung des Schwenkkopfs **34** unterscheiden sich zwar um den Höhenwinkel **b**, da dieser aber unveränderlich durch die Basisstation **5** vorgegeben ist, kann in eindeutiger Weise aus der Orientierung des Schwenkkopfs **34** die Emissionsrichtung **41** berechnet werden und vice versa. Die Emissionsrichtung **41** des Lichtstrahls **40** und die Orientierung des Schwenkkopfs **34** werden nachfolgend synonym verwendet. Auch bei zwei-achsigen Schwenkköpfen ist die Orientierung synonym für die Emissionsrichtung **41**.

Die Basisstation **5** enthält ferner eine Abstandsmesseinheit **43**, die in einer Messrichtung **44** den Abstand **d** der Basisstation **5** zu der Wand **3** bestimmt. Die Abstandsmesseinheit **43** basiert beispielsweise auf einer kombinierten Laufzeit- und Interferenzmessung eines Mess-Lichtstrahl **45**, der in die Messrichtung **44** emittiert und dessen Reflektion aus der Messrichtung **44** empfangen wird. Die Abstandsmesseinheit **43** kann eine eigene Lichtquelle, z.B. eine Laserdiode enthalten. Eine Modulation für den Mess-Lichtstrahl **45** kann beispielsweise über den Versorgungsstrom der Laserdiode eingeprägt werden. Die Abstandsmesseinheit **43** kann den Lichtstrahl **40** der Lichtstrahlquelle **39** nutzen und diesem beispielsweise mit einem elektro-optischen oder akusto-optischen Modulator eine Frequenz-und/oder Amplituden Modulation für die Laufzeit- und Interferenzmessung aufprägen. Ein Photodetektor zeichnet ein Schwebungssignal auf, welches die Interferenz des reflektierten Mess-Lichtstrahls **45** mit einem Referenzlichtstrahls ergibt. Die Abstandsmesseinheit **43** ermittelt aus dem Schwebungssignal die absolute Weglänge, welche der Mess-Lichtstrahl **45** zurückgelegt hat, ergo den Abstand **d**. Eine Messung benötigt etwa 0,1 s, um eine ausreichende Messgenauigkeit zu erhalten. Die beschriebene Abstandsmesseinheit **43** ist beispielhaft für andere optische Abstandsmesseinheiten.

Die Messrichtung **44** wird durch die Orientierung des Schwenkkopfs **34** vorgeben. Der Mess-Lichtstrahl **45** wird beispielsweise in den Strahlteiler **42** auf dem Schwenkkopf **34** eingekoppelt. Alternativ kann die Abstandsmesseinheit **43** auf dem Schwenkkopf **34** angeordnet sein. Die Messrichtung **44** ändert sich während dem Drehen oder Schwenken des Schwenkkopfs **34**. Bei dem beispielhaften Drehteller kann der Abstand **d** der Basisstation **5** für sich im Horizontalwinkel **a** unterscheidenden Messrichtungen **44** bestimmt werden. Die Messrichtung **44** ist in dem Beispiel gegenüber der vertikalen Achse **29** um den festen Höhenwinkel **b** geneigt. Der Höhenwinkel **b** ist beispielhaft durch den Strahlteiler **42** vorgegeben. Die Messrichtungen **44** beschreiben beim Drehen des Schwenkkopfs **34** einen Kegel. Aufgrund der eindeutigen geometrischen Beziehung zwischen der Messrichtung **44** und der Orientierung des Schwenkkopfs **34** werden nachfolgend beide synonym verwendet.

Bei den dargestellten Ausführungsformen werden der Lichtstrahl **40** und der Mess-Lichtstrahl **45** separat erzeugt. Die Emissionsrichtung **41** und die Messrichtung **44** können sich dabei zum Beispiel durch einen geringen Parallelversatz unterscheiden. Der Unterschied ist baubedingt bekannt und kann bei der Berechnung von Winkeln und Abständen kompensiert werden. Der Lichtstrahl **40** und der Mess-Lichtstrahl **45** können beispielsweise auch in deutlich voneinander verschiedener Raumrichtung in der Horizontalebene, z.B. in entgegengesetzter Richtung, emittiert werden (nicht dargestellt). Der Schwenkkopf **34** kann zur Kompensation in eine weitere Orientierung gedreht werden, so dass die Emissionsrichtung **41** des Lichtstrahls **40** mit der Messrichtung **44** in der vormaligen Orientierung zusammenfällt oder parallel ist. Dies gilt für jede Messrichtung **44**, die die Basisstation **5** einnehmen kann. Ebenso sind alle Paarungen aus vormaligen Orientierung und weiteren Orientierungen bekannt und hinterlegt. Ein Steuerungsverfahren kann beispielsweise bei den Abstandsmessungen die Orientierung der Messrichtung **44** gemäß den Paarungen auf die zugehörige Orientierung für den Lichtstrahl **40** korrigieren. Bei einer weiteren Ausführung ist keine separate Lichtstrahlquelle **39** für den Mess-Lichtstrahl **45** vorgesehen. Der Lichtstrahl **40** wird in die Abstandsmesseinheit **43** eingekoppelt. Die Abstandsmesseinheit **43** kann nur für die Abstandsmessungen oder dauernd eine Modulation auf den Lichtstrahl **40** aufprägen, um diesen als Mess-Lichtstrahl **45** zu verwenden. Der Lichtstrahl **40** und der Mess-Lichtstrahl **45** sind in diesem Fall koaxial. Da letztlich eine koaxiale Anordnung des Lichtstrahls **40** und des Mess-Lichtstrahls **45** durch geeignete Maßnahmen erreicht oder nachgebildet werden können, werden nachfolgend die Emissionsrichtung **41** und die Messrichtung **44** als zusammenfallend angenommen.

Die Basisstation **5** wird in dem Raum frei aufgestellt. Der Lichtstrahl **40** bzw. der Lichtpunkt **8** soll über den Wandabschnitt **20** laufen, in welchem der Markierer **7** getrackt werden soll. Hierbei ist insbesondere auf eine mögliche Verschattung durch andere Objekte in dem Raum zu achten. Die Basisstation **5** wirft einen sich permanent bewegenden Lichtpunkt **8** auf die Wand **3.** Der Bewegungsablauf des Lichtstrahls **40** ist durch den Schwenkkopf **34** und den Antrieb **35** vorgegeben. Bei der bevorzugten Ausführungsform des Drehtellers und einer festen Drehzahl des Antriebs **35** ändert sich der Horizontalwinkel **a** mit einer festen Rate und wiederholt sich nach einem Umlauf. Die von dem Lichtpunkt **8** auf die Wand **3** gezeichnete Linie ist von der Form und Orientierung der Wand **3** abhängig.

Die Bewegung des Lichtstrahls **40** und das Aufzeichnen der Bilder **9** wird von einer Zuordnungseinheit **46** synchronisiert, so dass für ein Bild **9**, das zu einem Zeitpunkt aufgezeichnet wurde, die zugehörige Emissionsrichtung **41** des Lichtstrahls **40** ermittelt werden kann.

Eine einfache Zuordnungseinheit **46** basiert auf einer konstanten Winkelgeschwindigkeit des Lichtstrahls **40** und dem Taktgeber **24** in der mobilen Messstation **6**. Die Basisstation **5** dreht den Drehteller mit einer konstanten Winkelgeschwindigkeit. Sobald die Nullmarkierung **38** des Drehtellers den Encoder **36** passiert, d.h. der Lichtstrahl **40** in die Nullrichtung **30** zeigt, sendet die Basisstation **5** ein Synchronisationssignal über das Funkmodul **47** aus. Ein Zähler **48** der mobilen Messstation **6** wird durch das Synchronisationssignal zurückgesetzt. Der Taktgeber **24** triggert den Auslöser **23** der Kamera **17** und inkrementiert den Zähler **48**. Der Horizontalwinkel **a der** Emissionsrichtung **41** ergibt sich somit aus dem Produkt der Winkelgeschwindigkeit und der von dem Zähler **48** gemessenen Zeitspanne seit dem letzten Synchronisationssignal.

Eine beispielhafte Zuordnungseinheit **46** nutzt einen zentralen Taktgeber **49**, der zu aufeinanderfolgenden Zeitpunkten ein Triggersignal an den Encoder **36** und die Kamera **17** aussendet. Die Übermittlung des Triggersignals erfolgt vorzugsweise funkbasiert. Der Encoder **36** ermittelt ansprechend auf das Triggersignal die Orientierung des Schwenkkopfs **34** bzw. die Emissionsrichtung **41** des Lichtstrahls **40**. Die Emissionsrichtung **41** wird der Zuordnungseinheit **46** übermittelt. Ein erstes Schieberegister **50**, z.B. FIFO, der Zuordnungseinheit **46** speichert die Emissionsrichtung **41**. Die Kamera **17** löst ansprechend auf das Triggersignal das Aufzeichnen eines der Bilder **9** aus. Die Rate der Triggersignale gibt die Aufzeichnungsrate der Bilder **9** vor. Der Taktgeber **49** kann in der Basisstation **5**, der mobilen Messstation **6** oder einer separaten Steuereinheit angeordnet sein. Die Bilder **9** werden in einem zweiten Schieberegister **51** mit gleicher Länge des ersten Schieberegisters **50** abgelegt. Die Bildauswertungseinheit **26** kann anstelle der Bilder **9** auch die Bildkoordinaten **x1**, **y1** des abgebildeten Lichtpunkts **8** in dem zweiten Schieberegister **51** ablegen. Die Emissionsrichtung **41** und die Bilder **9** liegen an gleich indizierten Speicherstellen der beiden Schieberegister **50**, **51.** Der Index repräsentiert den Zeitpunkt des Aufzeichnens des Bildes **9.** Die Zuordnungseinheit **46** gibt auf Anfrage beispielsweise die Emissionsrichtung **41** und die Bildkoordinaten **x1**, **y1** des ältesten Index aus und löscht danach diesen Index. Die getrennten Schieberegister kompensieren, dass das Speichern und Auswerten des Bildes **9** typischerweise länger als das Auslesen des Encoders **36** benötigt. Auch können somit Bilder **9** aufgenommen werden, bevor die Auswertung der vorhergehenden Bilder **9** abgeschlossen ist. Die Zuordnungseinheit **46** kann auch bei einer sich ändernden Winkelgeschwindigkeit der Emissionsrichtung **41** verwendet werden.

Die Zuordnungseinheit **46** kann auch ereignisgesteuert arbeiten. Beispielsweise zeichnet die mobile Messstation **6** nur dann Bilder **9** auf, wenn zu der aktuellen Emissionsrichtung **41** eine Messung des Abstandes **d** in der zugehörigen Messrichtung **44** vorliegt. Während einer Initialisierungsphase werden Abstandsmessungen in mehreren diskreten Messrichtungen **44** durchgeführt. Die ermittelten Abstände **d** und zugehörigen Messrichtungen **44** sind in einer Referenz-Datenbank **52** abgespeichert. Während der Trackingphase misst der Encoder **36** fortlaufend die Orientierung des Schwenkkopfs **34.** Die Zuordnungseinheit **46** vergleicht die aktuelle Emissionsrichtung **41** mit den in der Referenz-Datenbank **52** gespeicherten Messrichtungen **44**. Bei einer Übereinstimmung löst die Zuordnungseinheit **46** ein Triggersignal aus, auf welches der Auslöser **23** der Kamera **17** ansprechend ein Bild **9** aufzeichnet. Die aktuelle Emissionsrichtung 41bzw. Messrichtung **44** und der Abstand **d** können in das erste Schieberegister **50** geschoben werden. Die Bildauswertungseinheit **26** ermittelt die Koordinaten **x1**, **y1** des Lichtpunkts **8** und schreibt diese in das zweite Schieberegister.

Nachfolgend wird eine rudimentäre Trackingphase beschrieben, die mittels der zuvor beschriebenen mobilen Messstation **6** und der Basisstationen **5** die Position **53** einer von dem Markierer **7** auf der Wand **3** markierten Stelle **2** ermittelt. Bei dem Trackingverfahren wird davon ausgegangen, dass die Wände eben und vertikal sind. Der Anwender richtet die Kamera **17** der Messstation **6** horizontal aus, d.h. die Blickrichtung **18** der Kamera **17** liegt einer horizontalen Ebene. Ferner ist die markierte Stelle **2** innerhalb des Sichtfelds **19** der Kamera **17**, d.h. erscheint in jedem Bild **9** der Kamera **17.** Die Basisstation **5** wird auf Distanz zu der mobilen Messstation **6** in dem Raum aufgestellt.

Die Basisstation **5** dreht den Drehteller mit einer konstanten Winkelgeschwindigkeit. Die Messstation **6** zeichnet durchgehend Bilder **9** in einem Takt von beispielsweise 10 ms auf. Ein Zähler zählt die Anzahl der aufgenommenen Bilder **9** und wird zurückgesetzt, wenn die Basisstation **5** ein Synchronisationssignal zugehörig zu einer Nullrichtung **30** des Lichtstrahls **40** ausgibt. Wenn die Bildauswertungseinheit **26** den Lichtpunkt **8** abgebildet auf einen Bildpunkt **P** in dem aktuellen Bild **9** erkennt, wird der Zählerwert aufgezeichnet. Der Zählerwert entspricht somit dem Zeitpunkt t, an welchem das Bild **9** aufgezeichnet ist.

Die Bildauswertungseinheit **26** ermittelt die Bildkoordinaten **x1, y1** des Bildpunkts **P** auf den der Lichtpunkt **8** in dem Bild **9** abgebildet ist. Die Bildauswertungseinheit **26** bestimmt in dem gleichen Bild **9** auch den Bildpunkt **S** und dessen Bildkoordinaten **x0**, **y0** auf den die markierten Stelle **2** abgebildet ist. Die Bildkoordinaten **x0**, **y0** der zugehörig zu der markierten Stelle **2** können auch in einem separaten Bild **9** ermittelt werden, wobei beide Bilder **9** in der gleichen Blickrichtung **18** aufgenommen sein müssen. Die Bildauswertungseinheit **26** ermittelt die Distanz **r** zwischen dem Bildpunkt **P** des abgebildeten Lichtpunkts **8** und dem Bildpunkt **S** der markierten Stelle **2** in dem Bild **9** (z.B. r = ∥x1-x0, y1-y0∥). Wenn die Distanz r einen Schwellwert unterschreitet, d.h. die Bildpunkte P, **S** nahe und damit auch der reale Lichtpunkt nahe der markierten Stelle **2** auf der Wand **3** ist, wird das Bild **9** für die weitere Verarbeitung ausgewählt. Andernfalls wird das Bild **9** verworfen, es werden erneut Bilder **9** aufgezeichnet solange bis in einem Bild **9** die Distanz r geringer als der Schwellwert ist. Bei vertikalen Wänden **3** und dem nur um die vertikale Achse **29** drehenden Lichtstrahl **40** ist für den Schwellwert nur die horizontale Distanz d=x1-x0 der Bildpunkte **P**, **S** relevant.

Der Zählerwert oder die Zeitspanne t ermittelt als Produkt des Zählerwerts mit dem Takt wird an die Basisstation **5** übermittelt. Die Zuordnungseinheit **46** der Basisstation **5** errechnet aus dem Zeitpunkt t die Orientierung, d.h. den Horizontalwinkel a, des Schwenkkopfs **34** zu der Nullrichtung **30** basierend auf der festen Winkelgeschwindigkeit. Die Emissionsrichtung **41** des Lichtstrahls **40** vorgeben durch die Orientierung des Schwenkkopfs **34** wird dem abgebildeten Lichtpunkt **8** zugeordnet.

Die Zuordnungseinheit **46** ermittelt den Abstand **d** der Basisstation **5** zu der Wand **3** in der Emissionsrichtung **41**. Die Zuordnungseinheit **46** greift auf eine Referenz-Datenbank **52** zu, in der Abstände **d** der Basisstation **5** von der Wand **3** für mehrere Messrichtungen **44** abgespeichert sind. Die Referenz-Datenbank **52** wird vorzugsweise in einer Initialisierungsphase unmittelbar nach dem Aufstellen der Basisstation **5** mit entsprechenden Abstandsmessungen gefüllt. Die Zuordnungseinheit **46** sucht in der Referenz-Datenbank **52** beispielsweise die Messrichtung **44** mit der geringsten Abweichung zu der Emissionsrichtung **41** und übernimmt deren zugeordneten Abstand **d.** Alternativ können zu der Emissionsrichtung **41** benachbarte Messrichtungen **44** ausgewählt werden (Fig. 7). Der Abstand **d** für die Emissionsrichtung **41** wird aus den Abständen **d1**, **d2** der benachbarten Messrichtungen **44** interpoliert. Bei den angenommen ebenen und vertikalen Wänden **3** ergeben zwei Messrichtungen **44** mit unterschiedlichem Horizontalwinkel **a** bereits eine ausreichend hohe Genauigkeit für den Abstand **d** bei der Emissionsrichtung **41.** Die Messrichtung **44** kann außerhalb des Sichtfelds **19** der mobilen Messstation **6** liegen.

Die Koordinaten des Lichtpunkts **8** in dem Basis-Koordinatensystem **15** sind durch den Abstand **d** und die Emissionsrichtung **41** aus dem Horizontalwinkel **a**, und dem, bei dem beispielhaften Aufbau festen Höhenwinkel **b** eindeutig bestimmt. Da der Lichtpunkt **8** nahe der markierten Stelle **2** ist, zumindest in Bezug auf den Horizontalwinkel **a**, wird der Abstand **d** und zumindest der Horizontalwinkel **a** des Lichtpunkts **8** für die markierte Stelle **2** übernommen. Der Höhenwinkel **b** für die markierte Stelle **2** kann basierend auf der vertikalen Bildkoordinate **y1**, dem Horizontalwinkel **a**, dem Abstand **d** und dem festen Höhenwinkel **b** des Lichtstrahls **40** bei vertikalen Wänden **3** ohne zusätzliche Messung berechnet werden. Die ermittelten Koordinaten der markierten Stelle **2** werden zweckmäßiger Weise in den im Bauwesen üblicheren kartesischen Koordinaten dem Anwender angezeigt.

Nachfolgend wird eine vorteilhafte Trackingphase der markierten Stelle **2** auf der Wand **3** beschrieben, die verkürzt dargestellt ist, wenn analoge Verfahrensschritte bereits im Kontext der rudimentären Trackingphase beschrieben sind. Die Wände werden wiederum als vertikal und weitgehend eben angenommen. Die Basisstation **5** dreht den Lichtstrahl **40** mit einer konstanten Winkelgeschwindigkeit um die vertikale Achse **29**. Der mobilen Messstation **6** ist mit dem Umlauf des Lichtstrahls **40** synchronisiert, beispielsweise durch das Synchronisationssignal.

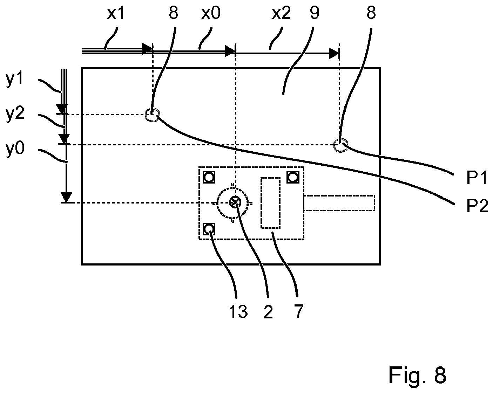

Die Kamera **17** zeichnet den Lichtpunkt **8** an zwei verschiedenen Stellen auf der Wand **3** auf. Die Blickrichtung **18** der Kamera **17** bleibt dabei unverändert. Die Kamera **17** kann beispielsweise mehrere Bilder 9 mit kurzer Belichtungszeit aufzeichnen. Die Belichtungszeit liegt beispielsweise im Bereich von 1 ms, um ein gutes Signal-zu-Rausch Verhältnis mit dem stark lokalisierten und hellen Lichtpunkt **8** gegenüber dem diffusen Umgebungslicht zu erhalten. Der Auslöser **23** hält zu jedem Bild **9** den Zeitpunkt fest, an welchem das Bild **9** aufgezeichnet wird. Die Bildauswertungseinheit **26** sucht unter den Bildern **9** ein erstes Bild **9** in dem der Lichtpunkt **8** auf einen ersten Bildpunkt **P1** abgebildet ist. Der Zeitpunkt t1 des Aufzeichnen des Bildes **9** wird dem Bildpunkt **P1** zugeordnet. Die Bildauswertungseinheit **26** sucht in den Bildern **9** nach einem zweiten Bild **9**, in dem der Lichtpunkt **8** auf einen zweiten Bildpunkt **P2** abgebildet ist. Der zweite Bildpunkt **P2** soll sich von dem ersten Bildpunkt **P1** unterscheiden. Andernfalls sucht die Bildauswertungseinheit **26** nach einem anderen geeigneten zweiten Bild **9**. Der Zeitpunkt t2 des Aufzeichnens des zweiten Bildes **9** wird dem zweiten Bildpunkt **P2** zugeordnet. Das Aufzeichnen der Bilder **9** durch die Kamera **17** und das Suchen nach einem Bild **9** mit Lichtpunkt **8** kann nacheinander oder parallel erfolgen. Fig. 8 zeigt das erste Bild **9** und zweite Bild **9** überlagert in einer Darstellung.

Die Kamera **17** kann auch solange Bilder **9** aufzeichnen, bis die Bildauswertungseinheit **26** in dem Bild **9** den abgebildeten Lichtpunkt **8** an einem ersten Bildpunkt **P1** erkennt. Die Kamera **17** belichtet das Bild **9** innerhalb einer kurzen Zeitspanne ein zweites Mal, wodurch der Lichtpunkt **8** auf einem zweiten Bildpunkt abgebildet wird. Die Zeitspanne ist ein entsprechend geringer Bruchteil der Umlaufszeit des Schwenkkopfs **34**, damit der Lichtpunkt **8** innerhalb des Sichtfelds **19** der Kamera **17** bleibt. Die Kamera **17** kann auch eine Belichtungszeit verwenden, die etwa der vorgenannten Zeitspanne entspricht. Der Lichtpunkt **8** zeichnet einen Strich in dem Bild **9**, dessen Endpunkte den vorgenannten Bildpunkten **P1, P2** entspricht. Der zweite Zeitpunkt t2 wird dabei dem Ende der Belichtungszeit zugeordnet.

Die Bildauswertungseinheit **26** bestimmt die Bildkoordinaten **x1**, **y1** des ersten Bildpunkts **P1** und die Bildkoordinaten **x2**, **y2** des zweiten Bildpunkts **P2**. Ferner werden die Bildkoordinaten **x0**, **y0** des Bildpunkts **S** auf den die markierten Stelle **2** in dem Bild **9** abgebildet ist ermittelt. Die relative Position **r** (rx, ry) der markierten Stelle **2** gegenüber den abgebildeten Lichtpunkten **8** kann bestimmt werden (z.B. rx=x0-x1/x2-x1). Bei einer weitgehend ebenen Wand **3** ist die relative Position der Bildpunkte **P1**, **P2** zu **S** in dem Bild **9** gleich zu den relativen Positionen des Lichtpunkts **8** zu der markierten Stelle **2** auf der Wand **3.**

Die Zuordnungseinheit **46** ermittelt zu den zwei Zeitpunkten t1, t2 die jeweilige Emissionsrichtung **41** des Lichtstrahls **40** und den Abstand **d** der Wand **3** in den Emissionsrichtungen **41**, ergo die absoluten Positionen des Lichtpunkts 8 in dem Basis-Koordinatensystem **15** zu den Zeitpunkten t1, t2. Die relative Position der markierten Stelle **2** kann mit den absoluten Positionen des Lichtpunkts **8** in eine absolute Position umgerechnet werden. Die errechnete Position wird dem Anwender angezeigt.

Die mobile Messstation **6** zeichnet die Bilder **9** vorzugsweise ereignisgesteuert auf. Die mobile Messstation **6** optimiert die Aufzeichnung der Bilder **9** dahingehend, dass zu einem ersten Zeitpunkt t1 der Lichtpunkt **8** an dem linken Rand des Bildes **9** und zu einem zweiten Zeitpunkt t2 der Lichtpunkt **8** an dem rechten Rand abgebildet wird. Die Kamera **17** zeichnet anfänglich zu beliebigen Zeitpunkten Bilder **9** auf, bis in einem ersten Bild **9** der Lichtpunkt **8** abgebildet ist. Der Zeitpunkt t0 für dieses Bild **9** wird festgehalten. Die Basisstation **5** wird innerhalb der bekannten Umlaufszeit T des Schwenkkopfs **34** den Lichtstrahl **40** wieder in die gleiche Emissionsrichtung **41** richten. Die mobile Messstation **6** zeichnet die nächsten Bilder nach dem festgehaltenen Zeitpunkt t0 in einem Zeitabstand auf, der etwas geringer als die Umlaufszeit T ist. Der nächste abgebildete Lichtpunkt **8** verschiebt sich in dem Bild **9** zu dem rechten oder linken Rand. Der Zeitpunkt t0 kann mehrfach iterativ angepasst werden, bis der Lichtpunkt **8** in einem gewünschten Abstand zu dem Bildrand erscheint, z.B. ein Abstand zum Rand geringer als 20 % der Bildbreite ist. Das erste Bild **9** wird aufgezeichnet und der zugehörige Zeitpunkt t1 festgehalten. Der aufgezeichnete Lichtpunkt **8** kann an den anderen Bildrand verschoben werden, indem Bilder nach dem ersten Zeitpunkt t1 in einem Zeitabstand aufgezeichnet werden, der größer als die Umlaufszeit T ist. Der Zeitpunkt wird mehrfach iterativ angepasst, bis der Lichtpunkt **8** in gewünschten Abstand zu dem anderen Bildrand abgebildet wird. Das zweite Bild **9** wird aufgezeichnet und der zugehörige Zeitpunkt t2 festgehalten. Die Zuordnungseinheit **46** ermittelt dann basierend auf den Zeitpunkten t1, t2, an denen der Lichtpunkt **8** auf Bildpunkte **P1**, **P2** am linkenw. rechten Rand des Bildes **9** abgebildet wird, die entsprechenden Emissionsrichtungen **41**, unter welchen der Lichtpunkt **8** zu den Zeitpunkten t1, t2 von der Basisstation **5** auf die Wand **3** projiziert wird.

Die Abstände **d** in bestimmte Messrichtungen **44** werden vorzugsweise während einer Initialisierungsphase gemessen und in der Referenz-Datenbank **52** abgelegt. Die Initialisierungsphase wird beispielsweise ausgeführt, unmittelbar nachdem die Basisstation **5** an einem neuen Standort aufgestellt ist. Zusätzlich kann die Initialisierungsphase in regelmäßigen Intervallen wiederholt oder manuell durch den Anwender veranlasst werden.

Während der Initialisierungsphase wird der Schwenkkopf **34** vorzugsweise mit dem gleichen Ablauf wie in der Trackingphase gedreht oder geschwenkt. Der beispielhafte Schwenkkopf **34** dreht allein und vollständig um die vertikale Achse **29**. Allerdings wird der Schwenkkopf **34** langsamer als während der Trackingphase bewegt.

Die Orientierung des Schwenkkopfs **34** wird beispielsweise schrittweise in Schritten von 0,5 Grad bis 2 Grad verändert. Die Schwenkkopf **34** kann nach jedem Schritt angehalten werden. Die Abstandsmesseinheit **43** misst in den diskreten Messrichtungen **44**, welche sich durch die Orientierung des Schwenkkopfs **34** ergeben, den Abstand **d** zu der Wand **3**. Alternativ wird die Schwenkkopf **34** langsam bewegt, z.B. ist ihre Winkelgeschwindigkeit geringer als 10 Grad pro Sekunde. Die Abstandsmesseinheit **43** misst in vorgegebenen Zeitabständen, somit zu diskreten Messrichtungen **44**, den Abstand **d** zur Wand **3**. Die Orientierungen werden in beiden Varianten vorzugsweise von dem Encoder **36** ermittelt. Die Zuordnungseinheit **46** bestimmt zu den Orientierungen die Messrichtungen **44** und legt diese zusammen mit dem gemessenen Abständen d in der Referenz-Datenbank **52** ab. Da das Messen des Abstandes zeitaufwändig ist, wird vorzugsweise jede Orientierung nur einmal für eine Abstandsmessung angefahren. Die Initialisierungsphase endet beispielsweise nach einem Umlauf des Lichtstrahls **40** um die Achse **29**.

Die Winkelgeschwindigkeit während der Initialisierungsphase ist geringer als 0,2 Hz. Die Messdauer der optischen Distanzmessgeräte für Distanzen im Bereich zwischen 2 m und 50 m ist technisch limitiert. Das Trackingsystem **1** wechselt nach der Initialisierungsphase in die Trackingphase. Die Winkelgeschwindigkeit des Schwenkkopfs **34** wird signifikant erhöht. Während der Trackingphase dreht der Schwenkkopf **34** mit mehr als 10 Hz um seine Achse **29**. Die hohe Winkelgeschwindigkeit ist insbesondere notwendig, wenn die mobile Messstation **6** handgeführt ist.

Die Initialisierungsphase kann regelmäßig wiederholt werden. Dazu kann die Trackingphase unterbrochen werden.

Ein weiteres Verfahren sieht vor, dass der Anwender oder die mobile Messstation 6 eine Abstandsmessung zu einer Messrichtung **44** spezifisch anfordert. Die Basisstation **5** wechselt dazu in die Initialisierungsphase. Der Schwenkkopf **34** wird gedreht und der Encoder **36** gibt ein Triggersignal aus, wenn die Messrichtung **44** erreicht ist. Der Mess-Lichtstrahl **45** wird für die Abstandsmessung in die Messrichtung **44** ausgesandt. Der gemessene Abstand **d** wird in der Referenz-Datenbank **52** gespeichert. Der Aufwand für eine solche Einzelmessung ist vergleichsweise hoch. Zunächst muss der Schwenkkopf **34** auf die niedere Winkelgeschwindigkeit abgebremst werden und abgewartet werden, bis das optische System sich beruhigt hat. Ferner ist das Anfahren einer spezifischen Messrichtung **44** aufwändiger, als die Werte einer vorliegenden Messrichtung **44** mittels dem Encoder **36** auszumessen.

Die Initialisierungsphase kann auch vollständig entfallen. Beispielsweise ist ein Bauplan des Innenraums in einer Datenbank **54** hinterlegt. Der Anwender positioniert die Basisstation **5** an einem Standort und richtet die Nullrichtung **30** der Basisstation **5** aus. Der Standort und die Nullrichtung **30** werden in die Basisstation **5** eingegeben. Die Zuordnungseinheit **46** misst in dem Bauplan die Abstände längs der Emissionsrichtungen **41** aus und speichert diese in der Referenz-Datenbank **52** für die Trackingphase ab. Die Initialisierungsphase funktioniert nur bei vorliegenden Bauplänen und einer ausreichenden Übereinstimmung des Bauplans mit dem tatsächlichen Innenraum.

Eine Trackingphase sieht vor, die absolute Position **55** der mobilen Messstation **6** in dem Innenraum zu bestimmen. Die absolute Position ist durch den Vektor **55** von der Basisstation **5** zu der mobilen Messstation **6** angegeben. Die Trackingphase basiert auf einer Erfassung des Lichtpunkts **8** an wenigstens drei unterschiedlichen Stellen **2** auf der Wand **3**, jedoch unter derselben Blickrichtung **18** der mobilen Messstation **6**. Die nachfolgenden Erläuterungen beziehen sich auf ebene, vertikale Wände, um die Beschreibung zu vereinfachen. Das Trackingverfahren ist jedoch darauf nicht angewiesen, die Wände können in beliebiger Weise gegenüber der vertikalen Richtung geneigt sein.

Die beispielhafte Basisstation **5** dreht den Drehteller **34** mit einer konstanten Winkelgeschwindigkeit um die vertikalen Achse **29**. Die Emissionsrichtung **41** des Lichtstrahls **40** ändert sich mit einer konstanten Wiederholrate. Der Horizontalwinkel a ändert sich mit der Winkelgeschwindigkeit, der Höhenwinkel b bleibt konstant.

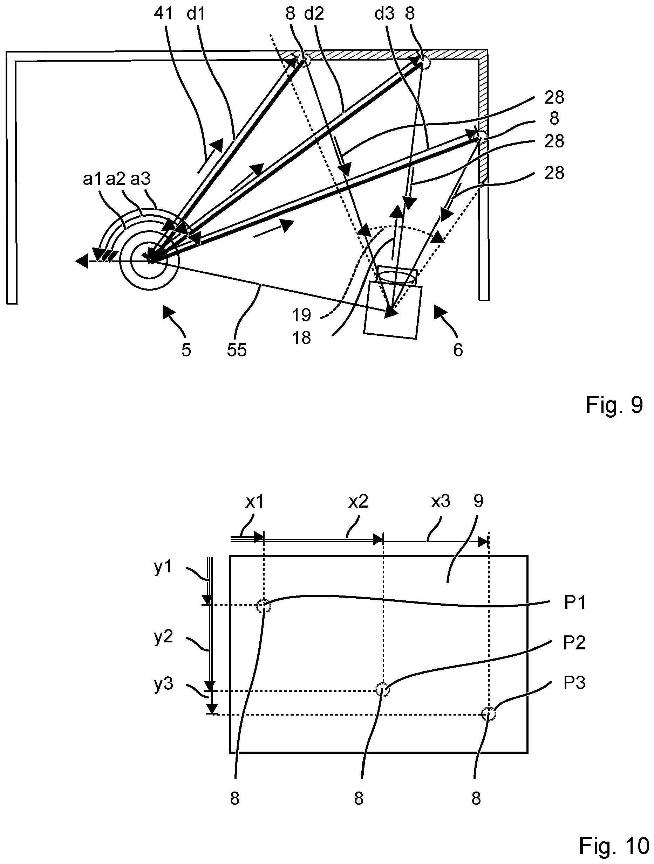

Die mobile Messstation **6** ist beispielhaft auf einem Stativ **16** horizontal ausgerichtet angeordnet. Die Kamera **17** erfasst den Lichtpunkt **8** an drei verschiedenen Bildpunkten **P1**, **P2**, **P3** d.h. unter drei verschiedenen Aufnahmerichtungen **28** bei gleichbleibender Blickrichtung **18**. Die Serie aus drei Bildern **9** ist in einem Bild **9** überlagert in Fig. 10 dargestellt. Die Bilder **9** können auch durch mehrfache Belichtung in einem Bild **9** aufgenommen werden, ergo die Serie ist nur ein Bild **9**. Die Serie zeichnet sich durch die gleichbleibende Blickrichtung **18** aus und dass der Lichtpunkt **8** abgebildet ist; die Serie umfasst nicht notwendigerweise mehr als ein Bild **9**.

Die mobile Messstation **6** triggert vorzugsweise das Aufzeichnen der Bilder **9** ereignisgesteuert, um die drei Bildpunkte **P1**, **P2**, **P3** auf denen der Lichtpunkt **8** abgebildet ist, möglichst weit zueinander verteilt über das Sichtfeld **19** zu erfassen. Die mobile Messstation **6** kann beispielsweise den Zeitabstand zwischen aufeinanderfolgend aufgenommenen Bildern 9 solange iterativ anpassen, bis der Lichtpunkt 8 auf Bildpunkte **P1**, **P3** an gegenüberliegenden Rändern des Bildes **9** und auf einen Bildpunkt **P2** nahe der Mitte des Bildes **9** abgebildet wird. Das Aufzeichnen der Bilder **9** kann ferner auf Zeitpunkte beschränkt sein, bei welchen die Emissionsrichtung **41** mit einer in der Referenz-Datenbank **52** hinterlegten Messrichtung **44** übereinstimmen. Ein entsprechendes Triggersignal kann von der Basisstation **5** ausgesandt werden. Dies ist insbesondere vorteilhaft, wenn die Wände nicht eben sind, z.B. aufgrund von vorspringenden Anbauten wie einem Waschbecken.

Die mobile Messstation **6** hält die jeweiligen Zeitpunkte t1, t2, t3 fest, an denen der Lichtpunkt **8** auf die drei Bildpunkte **P1**, **P2**, **P3** abgebildet wird. Die Zuordnungseinheit **46** bestimmt die Emissionsrichtung **41** zu den drei Zeitpunkten t1, t2, t3. Bei dem illustrierten Beispiel hat die Emissionsrichtung **41** einen zunehmenden Horizontalwinkel **a1**, **a2**, **a3** zu den aufeinanderfolgenden Bildpunkten **P1**, **P2**, **P3**. Ferner ermittelt die Zuordnungseinheit **46**, beispielsweise unter Rückgriff auf die Referenz-Datenbank **52**, den Abstand **d1**, **d2**, **d3** der Basisstation **5** zu der Wand **3** in den jeweiligen Emissionsrichtungen **41**. Die Koordinaten K1(a1,d1); K2(a2,d2); K3(a3,d3) der Lichtpunkte 8 auf der Wand 3 sind nun in Bezug zu der Basisstation **5** bekannt und sind den Bildpunkten P1(x1,y1); P2b(x2,y2); P3(x3,y3) eindeutig zugeordnet. Die relative Lage der Kamera 17bzw. der mobilen Messstation **6** zu der Basisstation **5**, d.h. der Vektor **55**, kann in eindeutiger Weise, zumindest für die horizontale Ebene, bestimmt werden. Der Vektor **55** kann beispielsweise basierend auf trigonometrischen Beziehungen errechnet werden.

Die Bestimmtheit der Lage der Kamera **17** soll mit folgender Überlegung veranschaulicht werden. Der Abstand **d** zweier Lichtpunkte **8** auf der Wand **3** überträgt sich in einen definierten Abstand **d** der zugehörigen Bildpunkte **P1**, **P2**. Der definierte Abstand **d** hängt von zwei Größen ab: der Entfernung **22** der Kamera 17 zu der Wand **3** und der Blickrichtung **18** auf die Wand **3** ab. Entsprechend sind zwei Paare von Lichtpunkten **8** ausreichend, um beide Größen, d.h. Entfernung **22** und Blickrichtung **18** zu ermitteln. Die beiden Paare können sich einen Lichtpunkt **8** teilen. Sofern die Kamera **17** nicht notwendigerweise horizontal ausgerichtet ist, ist ein vierter Lichtpunkt **8** für ein drittes Paar Lichtpunkte **8** notwendig, um die vertikale Orientierung der Kamera **17** zu bestimmen. Die vier Bildpunkte dürfen dabei nicht auf einer Linie liegen.

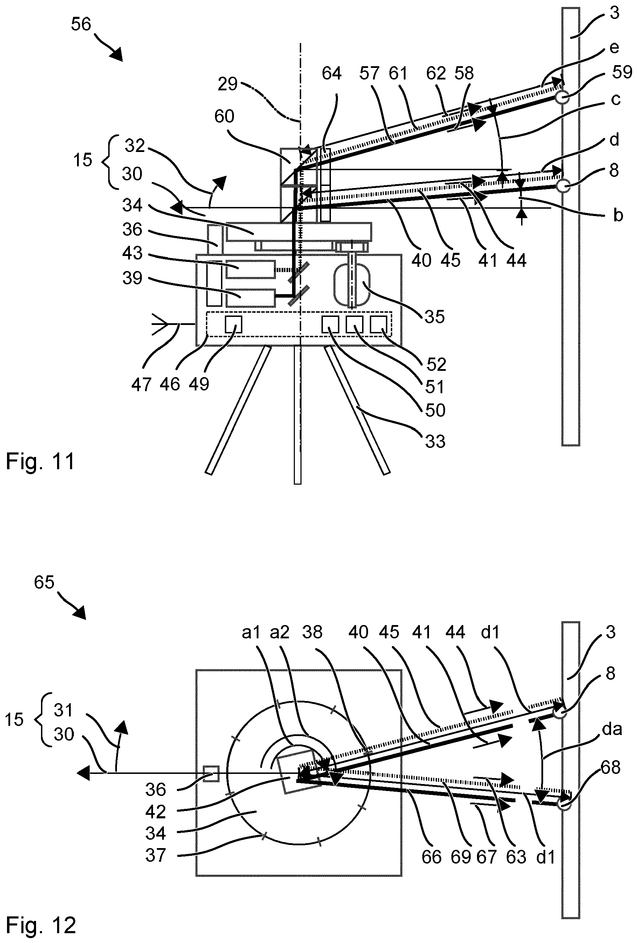

Fig. 11 zeigt eine weitergebildete Basisstation **56**. Die Basisstation **56** übernimmt alle Merkmale der zuvor beschriebenen Basisstation **5**, insbesondere der in Fig. 5 und Fig. 11 mit gleichen Bezugszeichen versehenen Elemente.

Der Schwenkkopf **34** ist vorzugsweise nur um die vertikalen Achse **29** drehbarw. schwenkbar.

Die Basisstation **56** emittiert ein Bündel mit zwei Lichtstrahlen **40**, **57** in unterschiedliche Emissionsrichtungen **41**, **58**. Die Emissionsrichtungen **41**, **58** unterscheiden sich vorzugsweise in dem Höhenwinkel **b**, **c**. Alternativ können die beiden Lichtstrahlen **40**, **57** parallel sein und längs der vertikalen Achse **29** um mehr als 20 cm beabstandet sein. Der erste Lichtstrahl **40** erzeugt einen ersten Lichtpunkt **8** auf der Wand **3** und der zweite Lichtstrahl **57** erzeugt einen zweiten Lichtpunkt **59** auf der Wand **3**. Der erste Lichtpunkt **8** ist in vertikaler Richtung zu dem zweiten Lichtpunkt **59** versetzt. Die beiden Lichtstrahlen **40**, **57** werden vorzugsweise von der gleichen Lichtstrahlquelle **39** erzeugt. Ein Strahlteiler **60** spaltet einen Lichtstrahl in die zwei Lichtstrahlen **40**, **57** auf.

Die Basisstation **56** erzeugt auch zwei Mess-Lichtstrahlen **45**, **61.** Der erste Mess-Lichtstrahl **45** wird in eine Messrichtung **44** emittiert und aus dieser empfangen, die vorzugsweise gleich der Emissionsrichtung **41** des ersten Lichtstrahls **40** ist. Die Emissionsrichtung **41** des Lichtstrahls **40** und die Messrichtung **44** des Mess-Lichtstrahls **45** können um einen konstanten Winkel, z.B. Horizontalwinkel a, versetzt sein. Der Schwenkkörper kann um den Winkel gedreht, verschwenkt werden, um in jede Messrichtung **44** auch einen Lichtstrahl **40** emittieren zu können. Die Emissionsrichtung **41** und die Messrichtung **44** können einen geringen Versatz aufweisen, soweit der zugehörige Messfehler tolerierbar ist. Der zweite Mess-Lichtstrahl **61** verhält sich zu dem zweiten Lichtstrahl **57**, wie der erste Mess-Lichtstrahl **45** zudem ersten Lichtstrahl **40**. Die zweite Messrichtung **62** hat vorzugsweise den Höhenwinkel **c**. Der Abstand d in der ersten Messrichtung **44** ist typischerweise verschieden von dem Abstand e in der zweiten Messrichtung **62**.

Die Basisstation **56** kann einen schaltbaren Verschluss **64** aufweisen, welcher vorzugsweise nach dem Strahlteiler **60** angeordnet ist. Der schaltbare Verschluss **64** kann unabhängig den ersten Mess-Lichtstrahl **45** und den zweiten Mess-Lichtstrahl **61** blockieren. Der beispielhafte Verschluss **64** kann mechanisch schwenkbare Klappen aufweisen. Eine bevorzugte Ausführungsform nutzt individuell verdunkelbare Glasplättchen, basierend auf Flüssigkristallanzeigen. Der schaltbare Verschluss **64** ermöglicht die Abstandsmessungen mit einer einzigen Abstandsmesseinheit **43**. Während einer Abstandsmessung wird durch einen Schaltpuls nur jeweils eines der Glasplättchen transparent, um nur einen Mess-Lichtstrahl **45** auszusenden und den oder die anderen Mess-Lichtstrahlen **61** zu blocken. Während der Initialisierungsphase werden die Abstandsmessungen durchgeführt. Der Schwenkkopf **34** bewegt mit geringer Winkelgeschwindigkeit die Mess-Lichtstrahlen **45, 61** um die vertikale Achse **29**. Während des ersten Umlaufs wird beispielsweise der obere Mess-Lichtstrahl **61** und während des zweiten Umlaufs der untere Mess-Lichtstrahl **45** geblockt. Der Verschluss **64** kann das durchlässige Glasplättchen beispielsweise wechseln, wenn das Synchronisationssignal beim Passieren der Nullrichtung **30** durch den Encoder **36** erzeugt wird.

Der Verschluss **64** kann auch verwendet werden, um einen oder mehrere der Lichtstrahlen **40**, **57** zeitweise zu blocken. Während des Trackingverfahrens sind anfänglich vorzugsweise alle Glasplättchen transparent, d.h. alle Lichtstrahlen **40**, **57** werden auf die Wand **3** emittiert und erzeugen versetzt zueinander mehrere Lichtpunkte **8**, **59**. Beim Erfassen eines Lichtpunkts **8**, **59** in dem Bild **9** kann die mobile Messstation **6** anfordern, dass einer oder mehrere der Lichtstrahlen **40**, **57** geblockt werden, um den zu dem abgebildeten Lichtpunkt **8** zugehörigen Lichtstrahl **40** zu ermitteln. Beispielsweise wird ein weiteres Bild **9** nach genau einer Umlaufszeit des Schwenkkopfs **34** aufgezeichnet und geprüft, ob der Lichtpunkt **8** weiterhin in dem Bild **9** abgebildet ist. Die Lichtpunkte **8** zu abgedunkelten Lichtstrahlen **40** sind in dem weiteren Bild **9** nicht mehr sichtbar.

Die dargestellte Basisstation **56** hat genau zwei Lichtstrahlen **40**, **57** und zwei Mess-Lichtstrahlen **45**, **61.** Die Anzahl der Lichtstrahlen **40**, **57** und der Mess-Lichtstrahlen **45**, **61** ist gleich, jedoch nicht auf zwei limitiert, bis zu acht Lichtstrahlen **40** mit unterschiedlichen Höhenwinkel **b**, **c** sind sinnvoll. Der Strahlteiler **60** stellt eine einfache Variante dar, um einer Lichtstrahlquelle **39** und einer Abstandsmesseinheit **43** die Lichtstrahlen **40** und die Mess-Lichtstrahlen **45** zu erzeugen, alternativ können auch mehrere Lichtstrahlquellen und mehrere Abstandsmesseinheiten verwendet werden.

Fig. 12 zeigt eine weitergebildete Basisstation **65.** Die Basisstation **65** übernimmt alle Merkmale der zuvor beschriebenen Basisstation **5**, insbesondere der in Fig. 5 und Fig. 11 mit gleichen Bezugszeichen versehenen Elemente. Die Basisstation **65** kann auch mit der Basisstation **56** kombiniert werden.

Der Schwenkkopf **34** ist vorzugsweise nur um die vertikalen Achse **29** drehbarw. schwenkbar.

Die Basisstation **65** kann zeitgleich ein Bündel mit zwei Lichtstrahlen **40, 66** in unterschiedliche Emissionsrichtungen **41**, **67** emittieren, welche sich zumindest im Horizontalwinkel **a** unterscheiden. Die Winkeldifferenz **da** der Emissionsrichtungen **41**, **67** ist konstant, somit kann bei bekannter erster Emissionsrichtung **41** die zweite Emissionsrichtung **67** eindeutig ermittelt werden und vice versa. Die Basisstation **65** erzeugt somit einen ersten Lichtpunkt **8** und dazu in horizontaler Richtung versetzt einen zweiten Lichtpunkt **68** auf der Wand **3**. Die Winkeldifferenz **da** ist vorzugsweise so gewählt, dass bei typischer Aufstellung der Basisstation **65** und der mobilen Messstation **6** beide Lichtpunkte **8**, **68** zeitglich in einem Bild **9** abgebildet werden. Die Winkeldifferenz **da** liegt vorzugsweise im Bereich zwischen 50 % und 80 % des horizontalen Winkels des Sichtfelds **19**.

Die Basisstation **65** hat einen ersten Mess-Lichtstrahl **45**, der in eine erste Messrichtung **44** ausgesendet und vorzugsweise aus dieser empfangen wird. Die erste Messrichtung **44** ist der ersten Emissionsrichtung **41** zugeordnet, vorzugsweise sind diese kolinear. Die Emissionsrichtung **41** und die Messrichtung **44** können sich auch um einen konstanten Winkel unterscheiden, der Schwenkkopf **34** kann um den Winkel bewegt werden, um in jede Messrichtung **44** einen Lichtstrahl **40** zu emittieren.

Sofern die beiden Emissionsrichtungen **41**, **67** den gleichen Höhenwinkel b aufweisen, kann auf einen zweiten Mess-Lichtstrahl **69** verzichtet werden. Der Schwenkkopf **34** wird einfach um die Winkeldifferenz **da** gedreht, um eine Abstandsmessung in der zweiten Emissionsrichtung **67** zugeordneten Messrichtung **63** durchzuführen. Bei Verwendung zweier oder mehrerer Mess-Lichtstrahlen **45**, **69** ist der schaltbare Verschluss **64** vorgesehen. Der schaltbare Verschluss lässt genau einen Mess-Lichtstrahl **45** passieren und blockiert die anderen Mess-Lichtstrahlen **69**. Durch Steuerpulse kann ausgewählt werden, welcher der Mess-Lichtstrahlen **45**, **69** passiert.

Während der Trackingphase kann die mobile Messstation **6** bereits zu einem Zeitpunkt zwei Lichtpunkte **8**, **68** an verschiedenen Bildpunkten **P1**, **P2** erfassen. Anfänglich wird die Kamera **17** zumeist nur einen der beiden Lichtpunkte **8** in dem Bild abbilden. Die nächsten Bilder können in einem Zeitabstand aufgezeichnet werden, der kürzer als die Umlaufszeit T ist. Der Lichtpunkt **8** wandert dadurch im Bild zu einem Bildrand. Sofern der zweite Lichtpunkt **68** nicht erscheint bevor der erste Lichtpunkt **8** das Bild verlässt, wird der Zeitabstand auf einen Wert größer als die Umlaufszeit T erhöht. Der erste Lichtpunkt **8** wandert zu dem anderen Rand, der zweite Lichtpunkt **68** sollte nun im Bild erscheinen. Das Bild **9** wird zum Zeitpunkt t aufgezeichnet, simultan sind der erste Lichtpunkt **8** auf den ersten Bildpunkt **P1** und der zweite Lichtpunkt **68** auf den zweiten Bildpunkt **P2** abgebildet.

Die Zuordnung der Emissionsrichtungen **41**, **67** erfolgt basierend auf dem einzigen Zeitpunkt t an dem das Bild **9** aufgenommen wurde. Die Zuordnungseinheit **46** bestimmt zu dem ersten Lichtstrahl **40** die zugehörige Emissionsrichtung **41**, z.B. den Horizontalwinkel **a1**, zu dem Zeitpunkt t. Die zweite Emissionsrichtung **67** des zweiten Lichtstrahls **66** ergibt sich rechnerisch durch Addition der bekannten und konstanten Winkeldifferenz **da** zu der ersten Emissionsrichtung **41** z.B. **a2=a1**+**da.**

Die Zuordnungseinheit 46 bestimmt durch Auslesen der Referenz-Datenbank **52** die Abstände **d1**, **d2** zugehörig zu der ersten Emissionsrichtung 41bzw. der zweiten Emissionsrichtung **67.**

Die Auswertungseinheit **70** ermittelt dann den Vektor **55** von der Basisstation **56** zu der mobilen Messstation **6**.

Die mobile Messstation **71** kann einen Projektor **72** aufweisen. Die mobile Messstation **71** übernimmt alle Merkmale der zuvor beschriebenen mobilen Messstation **6**, insbesondere der in Fig. 3 gezeigten Elemente. Die mobile Messstation **71** bestimmt ihre Position **55** und Blickrichtung **18** nach einem der vorherbeschriebenen Trackingverfahren.

Der Projektor **72** ist eine unlösbare Einheit mit der Kamera **17**. Entsprechend ist die Position und die Projektionsrichtung **73** des Projektors **72** bezogen auf die Kamera **17** bekannt. Vorzugsweise ist sind Projektionsrichtung **73** und die Blickrichtung **18** parallel zueinander. Der Projektor **72** projiziert den Bauplan auf die Wand **3**. Die mobile Messstation **71** kommuniziert über ihre Funkschnittstelle **25** mit der Datenbank **74**, in welcher der Bauplan hinterlegt ist. Die mobile Messstation **71** überträgt ihre Position **55** und ihre Blickrichtung **18**. Die Datenbank berechnet den für die Projektionsrichtung **73** darzustellenden Ausschnitt und Drehung des Bauplans und übermittelt die Bilddaten des Bauplans an die mobile Messstation **71**. Der Bauplan kann beispielsweise anzeigen, an welcher Stelle Rohre, Anker, Durchbrüche etc. in einer Wand **3** anzuordnen sind. Der Anwender kann den projizierten Bauplan mit der tatsächlichen Wand **3** vergleichen.

## Patentansprüche

1. Trackingverfahren zum Bestimmen der Position (55) einer mobilen Messstation (6) relativ zu einer Basisstation (5) in einem Innenraum:
wiederholtes Drehen oder Schwenken eines Bündels mit wenigstens einem Lichtstrahl (40) um wenigstens eine Achse (29) der Basisstation (5) in sich gemäß einem vorgegebenen Ablauf ändernde Emissionsrichtungen (41) zum Erzeugen eines wandernden Musters aus Lichtpunkten (8) auf einer Wand (3) des Innenraums;
Aufzeichnen einer Serie von Bildern (9) einer Wand (3) des Innenraums unter gleichbleibender Blickrichtung (18) einer Kamera (17) der mobilen Messstation (6), wobei in der Serie auf wenigstens drei unterschiedlichen Bildpunkten (P1, P2, P3) einer der wandernden Lichtpunkte (8) abgebildet ist;
Bestimmen der Bildkoordinaten (x1,y1; x2,y2; x3,y3) der wenigstens drei unterschiedlichen Bildpunkte (P1, P2, P3);
Bestimmen der wenigstens drei Emissionsrichtungen (41) der Lichtstrahlen (40), deren Lichtpunkte (8) zu einem Zeitpunkt in einem der Bilder (9) auf einen der wenigstens drei unterschiedlichen Bildpunkte (P1, P2, P3) abgebildet sind, basierend auf den Zeitpunkten, an welchen das jeweilige Bild (9) aufgezeichnet ist,
Ermitteln der wenigstens drei Abstände (d1, d2, d3) der Achse (29) der Basisstation (5) zu der Wand (3) in den wenigstens drei Emissionsrichtungen (41) basierend auf in einer Referenz-Datenbank (52) hinterlegten Abstandsmessungen zu der Wand (3) in von der Basisstation (5) ausgehenden Messrichtungen (44);
Bestimmen der Position (55) der mobilen Messstation (6) basierend auf den Bildkoordinaten (x1, y1; x2, y2; x3, y3) der wenigstens drei Bildpunkte (P1, P2, P3), der den Bildpunkten (P1, P2, P3) zugehörigen Emissionsrichtungen (41) und den jeweiligen Abständen (d1, d2, d3) der Basisstation (5) zu der Wand (3) in den zugehörigen Emissionsrichtungen (41).

2. Trackingverfahren nach Anspruch 1, **dadurch gekennzeichnet, dass** während einer Initialisierungsphase der wenigstens eine Mess-Lichtstrahl (45) um die wenigstens eine Achse (29) in gemäß einem vorgegeben Ablauf sich ändernden Messrichtungen (44) gedreht oder geschwenkt wird; der jeweilige Abstand (d) der Achse (29) zu der Wand (3) in den Messrichtungen (44) basierend auf einer Laufzeit und/oder Interferenzmessung des Mess-Lichtstrahls (45) gemessen wird und die Messrichtungen (44) und zugehörig gemessenen Abstände (d) in einer Referenz-Datenbank (52) gespeichert werden;
während einer Trackingphase der Abstand (d) in einer Emissionsrichtung (41) des Lichtstrahls (40) anhand einer mit der Emissionsrichtung (41) übereinstimmenden Messrichtung (44) in der Referenz-Datenbank (52) oder einem gemäß den jeweiligen Differenzen der abgespeicherten Messrichtungen (44) zu der Emissionsrichtung (41) gewichteten Mittelwert der abgespeicherten Abstände (d) ermittelt wird.

3. Trackingverfahren nach Anspruch 2, **dadurch gekennzeichnet, dass** während der Initialisierungsphase der Mess-Lichtstrahl (45) mit einer ersten Winkelgeschwindigkeit gedreht oder geschwenkt wird und während der Trackingphase das Bündel der Lichtstrahlen (40) mit einer zweiten Winkelgeschwindigkeit gedreht oder geschwenkt wird, wobei die zweite Winkelgeschwindigkeit größer als die erste Winkelgeschwindigkeit ist.

4. Trackingverfahren nach Anspruch 2 oder 3, **dadurch gekennzeichnet, dass** der Ablauf gemäß dem das Bündel mit dem wenigstens einen Lichtstrahl (40) gedreht oder geschwenkt wird identisch zu dem Ablauf gemäß dem der Mess-Lichtstrahl (45) gedreht oder geschwenkt wird.

5. Trackingverfahren nach einem der vorhergehenden Ansprüche, **dadurch gekennzeichnet, dass** das Bündel um genau eine Achse (29) gedreht oder geschwenkt wird und das Bündel wenigstens zwei Lichtstrahlen (40, 57) aufweist, die in einer die Achse (29) enthaltenden Ebene um einen Winkel (c) zueinander geneigt sind.

6. Trackingverfahren nach einem der vorhergehenden Ansprüche, **dadurch gekennzeichnet, dass** das Bündel aus genau einem Lichtstrahl (40) besteht.

7. Trackingverfahren nach einem der vorhergehenden Ansprüche, **dadurch gekennzeichnet, dass** ein erstes der Bilder (9) an einem ersten Zeitpunkt und ein zweites der Bilder (9) an zum ersten Zeitpunkt verschiedenen zweiten Zeitpunkt aufgenommen werden.

8. Trackingverfahren nach Anspruch 7, **dadurch gekennzeichnet, dass** der erster Zeitpunkt adaptiv angepasst wird, um einen der Lichtpunkte (8) des wandernden Musters auf einen Bildpunkt (P1) an einem Rand des Bildes (9) abzubilden, und der zweite Zeitpunkt adaptiv angepasst wird, um einen der Lichtpunkte (8) des wandernden Musters auf einen Bildpunkt (P3) an einem anderen Rand des Bildes (9) abzubilden.

9. Trackingverfahren nach einem der vorhergehenden Ansprüche, **dadurch gekennzeichnet, dass** die mobile Messstation (71) ein Bild (9) eines Bauplans auf die Wand (3) projiziert, wobei die mobile Messstation (71) ihre Blickrichtung (18) und Position (55) an eine Datenbank (54) mit dem Bauplan überträgt und die Datenbank (54) einen zugehörigen Bildausschnitt des Bauplans errechnet und an die mobile Messstation (71) überträgt.

10. Trackingsystems (1) zum Bestimmen zum Bestimmen der Position (55) einer mobilen Messstation (6) relativ zu einer Basisstation (5) in einem Innenraum mit einer Basisstation (5) und einer mobilen Messstation (6),
wobei die Basisstation ein Stativ (33), einen Schwenkkopf (34), der auf dem Stativ (33) um wenigstens eine Achse (29) dreh- oder schwenkbar gelagert ist, eine Lichtstrahlquelle (39), die ein Bündel von wenigstens einem Lichtstrahl (40) in von der Orientierung des Schwenkkopfs (34) abhängige Emissionsrichtungen (41) auf die Wand (3) zum Erzeugen eines Musters von Lichtpunkten (8) auf der Wand (3) ausgibt, einen Antrieb (35), der eine Orientierung des Schwenkkopfs (34) zum Bewegen des Musters von Lichtpunkten (8) auf der Wand (3) kontinuierlich verändert, einen Encoder (36), der die von dem Schwenkkopf (34) zu einem Zeitpunkt eingenommene Orientierung ermittelt,
wobei die Messstation (6) einen Auslöser (23) und eine Kamera (17), die zu Zeitpunkten gesteuert von dem Auslöser (23) eine Serie von Bildern (9) der Wand (3) unter einer gleichbleibenden Blickrichtung (18) aufzeichnet;
eine Bildauswertungseinheit (26), die die Bildkoordinaten der in den Bilder (9) auf einen Bildpunkt (S) abgebildeten markierten Stelle (2) und die Bildkoordinaten der auf Bildpunkte (P1, P2) abgebildeten Lichtpunkt (8) ermittelt,
einer Referenz-Datenbank (52), in der Abstandsmessungen zu der Wand (3) in von der Basisstation (56) ausgehenden Messrichtungen (44) abgespeichert sind,
eine Zuordnungseinheit (46), die den Bildpunkten (P1, P2) basierend auf dem Zeitpunkt an das jeweilige Bild (9) aufgezeichnet ist die jeweilige Emissionsrichtung des Lichtstrahls (66) zuordnet, und die den Abstands (d1, d2) der Achse (29) der Basisstation (5) zu der Wand (3) in den Emissionsrichtungen (41) basierend auf den in einer Referenz-Datenbank (52) hinterlegten Abstandsmessungen zu der Wand (3) in von der Basisstation (5) ausgehenden Messrichtungen (44) zuordnet;
eine Auswertungseinheit (70), die die Position (55) der mobilen Messstation (6) basierend auf den Bildkoordinaten (x0,y0) von wenigstens drei Bildpunkten (P1, P2, P2), der den Bildpunkten (P1, P2, P3) zugehörigen Emissionsrichtungen (41) und den jeweiligen Abständen (d1, d2, d3) der Achse (29) der Basisstation (5) zu der Wand (3) in den zugehörigen Emissionsrichtung (41) bestimmt.

11. Trackingsystem (1) nach Anspruch 10, **dadurch gekennzeichnet, dass** die Basiseinheit eine Abstandsmesseinheit (43) aufweist, die einen Mess-Lichtstrahl (45) zum Bestimmen eines Abstandes von der Achse (29) in einer Messrichtung (44) ausgibt, und wobei die Emissionsrichtung (41) von der Orientierung des Schwenkkopfs (34) abhängig ist.

12. Trackingsystem (1) nach Anspruch 9 oder 10, **dadurch gekennzeichnet, dass** der Schwenkkopf (34) nur um eine vertikale Achse (29) rotiert, ein Strahlteiler (60) ein Bündel aus mehreren Lichtstrahlen (40) mit unterschiedlichem Höhenwinkel (b) erzeugt.

## Claims

1. Tracking method for determining the position (55) of a mobile measuring station (6) in relation to a base station (5) in an interior space:
repeated turning or swivelling of a bundle with at least one light beam (40) around at least one axis (29) of the base station (5) in directions of emission (41) changing according to a preset sequence for producing a wandering pattern made of points of light (8) on a wall (3) of the interior space;
drawing a series of pictures (9) of a wall (3) of the interior space, keeping the same direction of view (18) of a camera (17) of the mobile measuring station (6),
in which one of the wandering points of light (8) is mapped onto at least three different image points (P1, P2, P3) in the series;
determining the image coordinates (x1, y1; x2, y2; x3, y3) of the at least three different image points (P1, P2, P3);
determining the at least three directions of emission (41) of the light beams (40), the points of light (8) of which are mapped onto one of the at least three different image points (P1, P2, P3) at one time in one of the pictures (9), based on the times when the relevant picture (9) is drawn,
establishing the at least three distances (d1, d2, d3) of the axis (29) of the base station (5) from the wall (3) in the at least three directions of emission (41), based on measurements of distance from the wall (3) in directions of measurement (44) going out from the base station (5) stored in a reference data base (52);
determining the position (55) of the mobile measuring station (6), based on the image coordinates (x1, y1; x2, y2; x3, y3) of the at least three image points (P1, P2, P3), the directions of emission (41) belonging to the image points (P1, P2, P3) and the relevant distances (d1, d2, d3) of the base station (5) from the wall (3) in the directions of emission (41) belonging to them.

2. Tracking method according to claim 1, **characterised in that**
during an initialising phase the at least one measuring light beam (45) is turned or swivelled around the at least one axis (29) in directions of measurement (44) changing according to a preset sequence; based on a running time and/or measurement of interference of the measuring light beam (45), the relevant distance (d) of the axis (29) from the wall (3) in the directions of measurement (44) is measured and the directions of measurement (44) and distances measured (d) belonging to them are stored in a reference data base (52);
during a tracking phase the distance (d) in a direction of emission (41) of the light beam (40) is determined using a direction of measurement (44) coinciding with the direction of emission (41) in the reference data base (52) or an average value of the distances (d) stored, weighted according to the relevant differences of the directions of measurement (44) stored to the direction of emission (41).

3. Tracking method according to claim 2, **characterised in that** during the initialising phase the measuring light beam (45) is turned or swivelled with a first angular speed and during the tracking phase the bundle of light beams (40) is turned or swivelled with a second angular speed, in which the second angular speed is greater than the first angular speed.

4. Tracking method according to claim 2 or 3, **characterised in that** the sequence, according to which the bundle with the at least one light beam (40) is turned or swivelled, is identical to the sequence, according to which the measuring light beam (45) is turned or swivelled.

5. Tracking method according to one of the previous claims, **characterised in that** the bundle is turned or swivelled around precisely one axis (29) and the bundle has at least two light beams (40, 57), which are inclined towards each other by an angle (c) in a plane containing the axis (29).

6. Tracking method according to one of the previous claims, **characterised in that** the bundle consists of precisely one light beam (40).

7. Tracking method according to one of the previous claims, **characterised in that** a first one of the pictures (9) is taken at a first time and a second one of the pictures (9) is taken at a second time that is different from the first time.

8. Tracking method according to claim 7, **characterised in that** the first time is adjusted adaptively, in order to map one of the points of light (8) of the wandering pattern onto an image point (P1) at one edge of the picture (9), and the second time is adjusted adaptively, in order to map one of the points of light (8) of the wandering pattern onto an image point (P3) at a different edge of the picture (9).

9. Tracking method according to one of the previous claims, **characterised in that** the mobile measuring station (71) projects a picture (9) of a construction plan onto the wall (3), in which the mobile measuring station (71) transmits its direction of view (18) and position (55) to a data base (54) with the construction plan and the data base (54) calculates an image section of the construction plan belonging to it and transmits it to the mobile measuring station (71).

10. Tracking system (1) for determining the position (55) of a mobile measuring station (6) in relation to a base station (5) in an interior space with a base station (5) and a mobile measuring station (6),
in which the base station has a tripod (33), a swivel head (34), which is mounted on the tripod (33) so that it may turn or swivel around at least one axis (29), a light beam source (39), which emits a bundle made of at least one light beam (40) in directions of emission (41) depending on the orientation of the swivel head (34) onto the wall (3) for producing a pattern of points of light (8) on the wall (3), a drive (35), which changes an orientation of the swivel head (34) for moving the pattern of points of light (8) on the wall (3) continuously, and an encoder (36), which determines the orientation taken up by the swivel head (34) at one time,
in which the measuring station (6) has a trigger (23) and a camera (17), which draws a series of pictures (9) on the wall (3), keeping the same direction of view (18), at times controlled by the trigger (23);
an image evaluation unit (26), which determines the image coordinates of the place (2) marked, mapped onto an image point (S) in the pictures (9), and the image coordinates of the point of light (8) mapped onto image points (P1, P2),
a reference data base (52), in which measurements of distance from the wall (3) in directions of measurement (44) going out from the base station (56) are stored,
an allocation unit (46), which allocates the relevant direction of emission of the light beam (66) to the image points (P1, P2), based on the time when the relevant picture (9) is drawn, and allocates them to the distances (d1, d2) of the axis (29) of the base station (5) from the wall (3) in the directions of emission (41), based on the measurements of distance from the wall (3) in directions of measurement (44) going out from the base station (5), stored in a reference data base (52);
an evaluation unit (70), which determines the position (55) of the mobile measuring station (6), based on the image coordinates (x0, y0) of at least three image points (P1, P2, P2), the directions of emission (41) belonging to the image points (P1, P2, P3) and the relevant distances (d1, d2, d3) of the axis (29) of the base station (5) from the wall (3) in the direction of emission (41) belonging to it.

11. Tracking system (1) according to claim 10, **characterised in that** the base unit has a distance measuring unit (43), which emits a measuring light beam (45) for determining a distance from the axis (29) in a direction of measurement (44), and in which the direction of emission (41) is dependent on the orientation of the swivel head (34).

12. Tracking system (1) according to claim 9 or 10, **characterised in that** the swivel head (34) rotates only around a vertical axis (29) and a beam splitter (60) produces a bundle made of several light beams (40) with a different height angle (b).

## Revendications

1. Procédé de repérage pour déterminer la position (55) d'une station de mesure mobile (6) par rapport à une station de base (5) dans un espace intérieur, comportant les étapes consistant à :
faire tourner ou pivoter de manière répétée un ensemble constitué d'au moins un faisceau lumineux (40) autour d'au moins un axe (29) de la station de base (5) dans des directions d'émission (41) qui varient en fonction d'une séquence prédéfinie pour générer un modèle de points lumineux (8) en mouvement sur une paroi (3) de l'espace intérieur,
enregistrer une série d'images (9) d'une paroi (3) de l'espace intérieur sous une direction de visée constante (18) d'une caméra (17) de la station de mesure mobile (6), l'un des points lumineux (8) en mouvement dans la série étant reproduit sur au moins trois points d'image différents (P1, P2, P3),
déterminer les coordonnées d'image (x1,y1 ; x2,y2 ; x3,y3) des au moins trois points d'image différents (P1, P2, P3),
déterminer les au moins trois directions d'émission (41) des faisceaux lumineux (40) dont les points lumineux (8) sont reproduits à un instant donné dans l'une des images (9) sur l'un des au moins trois points d'image différents (P1, P2, P3), sur la base des instants où l'image (9) respective est enregistrée,
établir les au moins trois distances (d1, d2, d3) de l'axe (29) de la station de base (5) jusqu'à la paroi (3) dans les au moins trois directions d'émission (41) sur la base de mesures de distance par rapport à la paroi (3) stockées dans une base de donnée de référence (52) dans des directions de mesure (44) partant de la station de base (5),
déterminer la position (55) de la station de mesure mobile (6) sur la base des coordonnées d'image (x1,y1 ; x2,y2 ; x3,y3) des au moins trois points d'image (P1, P2, P3), des directions d'émission (41) associées aux points d'image (P1, P2, P3) et des distances (d1, d2, d3) respectives de la station de base (5) par rapport à la paroi (3) dans les directions d'émission associées (41) .

2. Procédé de repérage selon la revendication 1, **caractérisé en ce que**
pendant une phase d'initialisation, le au moins un faisceau lumineux de mesure (45) tourne ou pivote autour du au moins un axe (29) dans des directions de mesure (44) variant selon une séquence prédéfinie, la distance respective (d) de l'axe (29) jusqu'à la paroi (3) dans les directions de mesure (44) est mesurée sur la base d'une durée et/ou d'une mesure d'interférence du faisceau lumineux de mesure (45), et les directions de mesure (44) et les distances (d) associées mesurées sont mémorisées dans une base de données de référence (52),
pendant une phase de repérage, la distance (d) dans une direction d'émission (41) du faisceau lumineux (40) est déterminée au moyen d'une direction de mesure (44) correspondant à la direction d'émission (41) dans la base de données de référence (52) ou d'une valeur moyenne des distances (d) enregistrées pondérée en fonction des différences respectives entre les directions de mesure (44) enregistrées et la direction d'émission (41).

3. Procédé de repérage selon la revendication 2, **caractérisé en ce que** pendant la phase d'initialisation, le faisceau lumineux de mesure (45) tourne ou pivote à une première vitesse angulaire et pendant la phase de repérage, l'ensemble de faisceaux lumineux (40) tourne ou pivote à une seconde vitesse angulaire, la seconde vitesse angulaire étant plus grande que la première vitesse angulaire.

4. Procédé de repérage selon la revendication 2 ou 3, **caractérisé en ce que** la séquence en fonction de laquelle l'ensemble constitué du au moins un faisceau lumineux (40) tourne ou pivote est identique à la séquence en fonction de laquelle le faisceau lumineux de mesure (45) tourne ou pivote.

5. Procédé de repérage selon l'une des revendications précédentes, **caractérisé en ce que** l'ensemble tourne ou pivote autour d'exactement un axe (29) et l'ensemble comporte au moins deux faisceaux lumineux (40, 57) qui sont inclinés l'un par rapport à l'autre d'un angle (c) dans un plan contenant l'axe (29).

6. Procédé de repérage selon l'une des revendications précédentes, **caractérisé en ce que** l'ensemble est constitué d'exactement un faisceau lumineux (40).

7. Procédé de repérage selon l'une des revendications précédentes, **caractérisé en ce qu'**une première des images (9) est enregistrée à un premier instant et une seconde des images (9) est enregistrée à un second instant différent du premier instant.

8. Procédé de repérage selon la revendication 7, **caractérisé en ce que** le premier instant est réglé de manière adaptative afin de reproduire l'un des points lumineux (8) du modèle en mouvement sur un point d'image (P1) sur un bord de l'image (9), et le second instant est réglé de manière adaptative afin de reproduire l'un des points lumineux (8) du modèle en mouvement sur un point d'image (P3) sur un autre bord de l'image (9).

9. Procédé de repérage selon l'une des revendications précédentes, **caractérisé en ce que** la station de mesure mobile (71) projette une image (9) d'un plan de construction sur la paroi (3), dans lequel la station de mesure mobile (71) transmet sa direction de visée (18) et sa position (55) à une base de données (54) avec le plan de construction, et la base de données (54) calcule un cadrage associé du plan de construction et la transmet à la station de mesure mobile (71).

10. Système de repérage (1) destiné à déterminer la position (55) d'une station de mesure mobile (6) par rapport à une station de base (5) dans un espace intérieur, en utilisant une station de base (5) et une station de mesure mobile (6),
dans lequel la station de base comporte un trépied (33), une tête pivotante (34) qui est montée sur le trépied (33) de manière à pouvoir tourner ou pivoter autour d'au moins un axe (29), une source de faisceau lumineux (39) qui délivre un ensemble constitué d'au moins un faisceau lumineux (40) dans des directions d'émission (41) dépendantes de l'orientation de la tête pivotante (34) sur la paroi (3) pour générer un modèle de points lumineux (8) sur la paroi (3), un entraînement (35) qui fait varier en continu une orientation de la tête pivotante (34) pour déplacer le modèle de points lumineux (8) sur la paroi (3), un codeur (36) qui détermine l'orientation enregistrée à un instant par la tête pivotante (34),
dans lequel la station de mesure (6) comporte un déclencheur (23) et une caméra (17) qui enregistre, à des instants commandés par le déclencheur (23), une série d'images (9) de la paroi (3) sous une direction de visée constante (18),
une unité d'analyse d'image (26) qui détermine les coordonnées d'image de l'emplacement (2) marqué reproduit dans les images (9) sur un point d'image (S) et les coordonnées d'image du point lumineux (8) reproduit sur des points d'image (P1, P2),
une base de données de référence (52) dans laquelle sont enregistrées des mesures de distance jusqu'à la paroi (3) dans des directions de mesure (44) partant de la station de base (56),
une unité d'affectation (46) qui associe la direction d'émission respective du faisceau lumineux (66) aux points d'image (P1, P2) sur la base de l'instant où l'image (9) respective est enregistrée, et qui associe la distance (d1, d2) de l'axe (29) de la station de base (5) jusqu'à la paroi (3) dans les directions d'émission (41) sur la base des mesures de distance jusqu'à la paroi (3) stockées dans une base de données de référence (52) dans des directions de mesure (44) partant de la station de base (5),
une unité d'analyse (70) qui détermine la position (55) de la station de mesure mobile (6) sur la base des coordonnées d'image (x0,y0) d'au moins trois points d'image (P1, P2, P3), des directions d'émission (41) associées aux points d'image (P1, P2, P3) et des distances respectives (d1, d2, d3) de l'axe (29) de la station de base (5) jusqu'à la paroi (3) dans la direction d'émission (41) associée.

11. Système de repérage (1) selon la revendication 10, **caractérisé en ce que** l'unité de base comporte une unité de mesure de distance (43) qui délivre un faisceau lumineux de mesure (45) pour déterminer une distance par rapport à l'axe (29) dans une direction de mesure (44), et dans lequel la direction d'émission (41) dépend de l'orientation de la tête pivotante (34).

12. Système de repérage (1) selon la revendication 9 ou 10, **caractérisé en ce que** la tête pivotante (34) tourne uniquement autour d'un axe vertical (29), un séparateur de faisceau (60) générant un ensemble constitué de plusieurs faisceaux lumineux (40) avec un angle d'élévation (b) différent.
